# EUROPEAN PATENT SPECIFICATION

(11) **EP 1 292 765 B1**
(45) Date of publication and mention of the grant of the patent: **01.06.2005**
(21) Application number: 01938420.5
(22) Date of filing: 14.06.2001
(51) Int. Cl.: F03B 13/20

(54) **A WAVEPOWER COLLECTOR**
EINRICHTUNG ZUR AUSNUTZUNG DER ENERGIE VON MEERESWELLEN
COLLECTEUR D'ENERGIE HOULOMOTRICE

(30) Priority: 14.06.2000 GB 0014597; 18.09.2000 GB 0022869
(43) Date of publication of application: 19.03.2003
(73) Proprietor: APPLIED RESEARCH & TECHNOLOGY LIMITED, Inverness IV1 1LZ (GB)
(72) Inventor: THOMSON, Allan Robert, Inverness IV1 2ER (GB); WELLS, Alan Arthur, Mepal Ely Cambridgeshire CB6 2AR (GB)
(74) Representative: Midgley, Jonathan Lee
(86) International application number: PCT/GB2001/002596
(87) International publication number: WO 2001/096737

(56) References cited:
- EP-A- 0 035 346
- WO-A-00/17519
- GB-A- 1 448 204
- GB-A- 2 002 052
- US-A- 1 078 323
- US-A- 1 757 166
- US-A- 4 077 213
- US-A- 4 684 815
- US-A- 4 686 377

## Description

This invention relates to an apparatus for extracting power from water waves and a method of constructing such an apparatus.

There is a considerable amount of energy available from the waves generated in the sea and in larger lakes. Much effort has been put into attempting to harness this considerable source of energy by converting the oscillatory motion of the body of water into a more readily useable form of mechanical energy and/or electrical energy. However, these efforts have been relatively unsuccessful and consequently this valuable source of renewable power remains substantially untapped.

One of the main problems associated with wavepower collectors is providing a structure which is reliable and which will last in the hostile environment of the sea for a reasonable period of time without being unnecessarily expensive to produce or maintain. These factors lead to the problems faced by previous wavepower collectors, namely that the cost of manufacturing and maintaining collectors has been so high as to make them insufficiently cost effective to provide a viable alternative to more traditional forms of power generation, except in extreme conditions or locations.

Various methods have been proposed for extracting power from waves. Among these are those which are formed by a long slender floating beam which is sufficiently flexible to follow the profile of the waves as they pass by them. This type of construction is described in the paper entitled "Porpoise, The Buckling Resonant Raft" by Farley, Parkes and Grimshaw (Second International Symposium on Wave and Tidal Energy, September 23-25,1981) and "Wave Energy Conversion by Resonant Rafts" by F.J.M Farley (Royal Military College of Science, Shrivenham, Wilts. 3rd International Conference of Future Energy Concepts, London, IEE 1981). These documents relate to a series of connected floating rafts which flex relative to each other. The flexing action causes pistons attached to one raft to pump a hydraulic fluid out of a cylinder in an adjacent raft which can be used to provide useful power.

Resonance is commonly used in wave energy collectors, firstly to cancel inertial forces, allowing the wave force to act essentially on the power extraction mechanism; and secondly to make the motion of the device greater than the wave amplitude, effectively sucking in power from the surrounding sea. The amplified motion allows a relatively small body to radiate sufficiently to cancel the incoming waves over a width which is related more to the length of the collector than its beam.

EP-0,035,346 shows a wave energy connector formed from a plurality of hinged portions. WO 00/17519 describes a collector which has a plurality of hinged sections, the hinge at one end of a section being along a perpendicular axis to the hinge at the other end. Power extraction is via pistons mounted between sections.

Shallow rafts of barge form have natural periods of vertical oscillation which are too short to provide resonance because they have too much floating stiffness and too little displacement mass. Whilst the period can be increased by superimposing an end-to-end compression which is sufficient to almost induce longitudinal buckling, there are fundamental problems with having a number of substantially rigid structures hinged together. The principle weakness of hinged rafts relates to the low relative velocities and extremely large hinge forces and moments at power extraction levels comparable with hydro-dynamic performance potentials. Furthermore, hinges and hydraulic rams which are well proportioned in engineering terms are too large to be accommodated.

According to the present invention there is provided a wavepower collector comprising:
a plurality of spaced-apart sections; and
compressing means for applying a retaining force to the sections to push the sections towards adjacent sections, characterized by further comprising
one or more passages in each section for fluid communication, wherein a mouth of each passage is aligned with a mouth of a corresponding passage in an adjacent section; and
one or more compressible connectors, each arranged between a mouth of a passage and the mouth of a corresponding passage in an adjacent section and having a through bore for fluid communication, wherein the connectors maintain the connection between each passage and its corresponding passage during variations in the distance between the mouth of each passage and the mouth of its corresponding passage due to the sections moving relative to one another.

According to a first arrangement, the sections of the collector are preferably spaced apart by less than 1 metre, more preferably about 0.25m. The sections themselves are preferably disc shaped i.e. their axial length or thickness is less than their diameter. The sections are preferably around 6.5 metres in diameter and less than 6.5 metres thick, more preferably around 4 metres thick. A collector preferably comprises 20 sections or more. The sections are generally cylindrical. The sections may however have other cross sectional shapes. For example, it may be advantageous to form the sections with a D-shaped cross-section with the curved portion facing down towards the sea bed. Similar dimensions to those described above are applicable. Other shapes may also be used to provide varying degrees of buoyancy and centres of buoyancy. Furthermore, a flat or partially flat top may be useful for maintenance purposes. Each section is preferably arranged so that it can pivot relative to an adjacent section without contacting it. In this way, the mouths of the passages in adjacent sections are brought closer together such that the axial length of the pipe formed by the passages and connectors is reduced or increased to provide a pumping action. The sections preferably have generally flat ends facing each adjacent section. The passages may be provided within the body of the section. Alternatively, the passages may be mounted either partially or completely on the outside of the sections.

Each section may be formed in a single piece by forming a thin outer concrete wall which is subsequently wound with steel wire under tension in order to provide a compressive hoop stress in the concrete. The interior of each section can be filled with high density polyethylene buoyancy cylinders having closed ends. Preferably, seven cylindrical buoyancy cylinders are used with an arrangement where six cylinders are arranged regularly around a central cylinder. However, the buoyancy elements need not be cylindrical. Any suitable shape and arrangement being applicable appropriately. Spaces are left between the buoyancy cylinders in which to include the passages and tubes through which stressing cables may pass. Alternatively the passages may be set in the walls of the section.

Alternatively, the sections may be constructed by forming a thin reinforced concrete outer shell, as before, but by then filling the interior space with a gas concrete. Such a gas concrete is preferably formed from a mix of sand and Portland cement with a lean mix of aluminium powder included. This composition is mixed with a metered addition of hot water which induces expansion through the generation of hydrogen and steam. As the increased temperature is maintained during curing due to the thermal insulation of the gas concrete, a small amount of thermal contraction will result once the curing has finished and the concrete cools down. This induces a residual tensile strain in the concrete which again puts the outer concrete skin into hoop compression. The end faces of the gas concrete at least and preferably the entire section is protected by applying a sealing coating to the surface. The coating is preferably glass reinforced resin.

As an alternative, the outer layer of the collector may be constructed by forming two spaced apart steel sheets into an annular-section to form a steel composite, e.g. Bi-steel (RTM) which can be filled with a structural ballast material or concrete, preferably low density concrete. Alternatively, the outer layer may be left unfilled, for example if additional ballast is not required due to ballast in the interior of the collector sections. The central zone of the collector sections may be filled with ballast or simply filled with sea water which although not fully entrapped, functions adequately to provide the required ballast.

Preferably, the buoyancy of the collector is such that when it is placed in the water, it floats level, with around 60%-90% of its external volume submerged. Advantageously, the freeboard is less than 3 metres preferably 2m. Beneficially, the axial elastic bending stiffness of the collector is such that the natural period of bending while afloat matches that of the incident wave period, usually around 8-12 seconds for typical principal prevailing waves but this may be varied according to the specific conditions of the installation location.

In an alternative arrangement of the present invention, the sections are again preferably generally cylindrical. However, in this arrangement, the sections are arranged so that they are side by side (rather end to end) with the axis of each section being arranged generally parallel to the axis of each adjacent section and thus the axes of the sections are generally perpendicular to the axis of the collector as a whole. Again, the sections may have a non-circular cross-section. In this construction, the passages are preferably provided on the upper and lower parts of each section. In this way, as the sections pivot/roll relative to each other, the mouths of the passages are moved towards each other in a similar manner to that described above. A number of passages may be provided on each section arranged along the axial length of the section. Each section may be arranged to have a centre of mass which is offset from its centre. This may be achieved by providing additional mass at one side of the section or by providing additional buoyancy at the opposite side of the section. The sections are preferably arranged such that the centre of mass is offset to be vertically above the axis of each section when in the water. In this way the natural period of the whole collector is increased. Some or all of the offset may be provided by providing a different number of passages on the top than on the bottom.

The cylinders are preferably provided with generally flat ends which provides the sections with appropriate conditions for linearity and good capture of waves as they pass by the collector. Advantageously, the length of the cylinders is more than the diameter. This provides good transfer stability, strength and an adequate displacement.

The sections of the collector are preferably held together by providing one or more cables or tendons down the length of the collector. The cables are preferably made of polyester ropes (or other suitable material). The cables are preferably tensioned in use in order to provide a continuous longitudinal compressive force along the length of the collector on a plane passing through the neutral axis. The cables may be internal, i.e. passing within the outer shell of the collector through each or the sections, or external, i.e. extending down the length of the collector clear of the sections.

With internal cables, the or each cable may pass through a tube in each section as described above. A spacer is preferably provided between each section and around each cable in order to space the sections apart while still allowing them to pivot relative to each other. The spacers are preferably made from rubber or high density polyethylene. The spacers may advantageously be formed in a laminated structure with rigid washers (preferably steel) placed at regular intervals within the spacer. This provides improved reaction to bursting of the spacer under high load. Although two tendons are preferably provided, a single tendon may be used in some circumstances. In particular, where wave fluxes arise simultaneously from different azimuth directions, as in the open sea, one central tendon is preferable.

With external cables, the cables are attached to the end regions of the collector but are preferably attached at a point outstanding from the collector so that there is a separation between the cables and the side of the collector sections to avoid damage due to the cable colliding with the body in use.

In either of the arrangements described above, the connectors may be formed as axially compressible resilient members referred to herein as olives. The olives are preferably only compressible in an axial direction. They are preferably inextensible in a radial direction such that the diameter of a bore through the olive does not increase significantly due to axial compression or internal pressure. This resistance to radial expansion may be provided by internal steel wire windings in the inner surface of the bores in the olives. The olives are preferably formed from an elastic material such as natural rubber or reinforced polyethylene.

The connectors (olives) are preferably generally cylindrical in shape but with a diameter which decreases from the centre towards each of the two ends. Thus the two halves of the olive have a generally conical exterior shape. The passages in the collector sections are preferably provided with correspondingly shaped conical mouths at the ends of each of the passages to accommodate the olives. Preferably, the angle (relative to the longitudinal axis) of the taper of the mouths is greater than the angle of taper of the olives to allow for compression of the olives in use.

Alternatively, the connectors may be formed in a generally cylindrical shape. In this construction, the mouths of the passages include a portion with a larger diameter than the rest of the passage such that the end of the connector can be inserted into the larger diameter portion and abut against the inner end face of the recess. In this construction, the connector is also preferably compressible only in an axial direction and inextensible in a radial direction. The connector may also be provided with internal reinforcement to prevent radial expansion in a similar way to that described above. In this construction, the connector is preferably formed from reinforced natural rubber or reinforced polymer such as polyethylene. The connector may be provided with a plurality of rigid reinforcing annular discs, preferably made of steel. These discs provide the connector with a laminated structure to resist collapse or permanent deformation under high loads. These reinforcing members may be provided as substantially flat linear washers. Alternatively, the washers may have a slightly conical shape similar to a Belleville washer. This arrangement allows the connector to operate in a manner similar to bellows whereby the internal volume is reduced.

A further alternative for the connector is to have a tyre-like structure with the beads attached to adjacent sections such that as they move relative to each other, the tyre like structure can be deformed to maintain a good connection between the mouths of the passages.

A further alternative for the connectors is to extend the passages out of the sections as a short extension or stub pipe. A further concentric tube is provided around the extension pipes around the region between them and extending so as to overlap with each of the extension pipes. In the annular space between the outer tube and each of the extension tubes, a seal is provided to seal the connector. As the sections move relative to each other, the extension pipes move towards and away from each other but remain overlapping with the outer tube so that the seal is retained through out the cycle. Although the connection between the extension pipes is preferably located diametrically outside the extension pipes, the outer tube could be replaced by a tube which is diametrically within the extension tubes but still sealed in the annular space between it and the extension tubes.

In another alternative, there is provided a wavepower collector comprising: a plurality of spaced-apart sections; and compressing means for applying a retaining force to the sections to push the sections towards adjacent sections, characterized by further comprising one or more passages in each section for fluid communication, wherein a mouth of each passage is aligned with a mouth of a corresponding passage in an adjacent section; one or more compressible spacer members arranged between adjacent sections to resist said retaining force and hold said sections in said spaced-apart configuration; and one or more connectors, each provided between a mouth of a passage and the mouth of a corresponding passage, the ends of the connectors being arranged to slide axially within the respective mouths, wherein the connectors maintain the connection between each passage and its corresponding passage during variations in the distance between the mouth of each passage and the mouth of its corresponding passage due to the sections moving relative to one another. The connector is arranged so that it extends into and slides axially within the passages into which its ends are respectively inserted. In such an arrangement the connector is preferably a tubular member which is slidably mounted with each end in two different opposing passages. The tubular member is provided with sealing portions to form a seal between each end and the respective passage. The tubular member connects one passage with an opposing passage for fluid to flow through it from one passage to the other. This again provides for a continuous passage or pump pipe through which pressurised fluid is passed to one or more valves either at one end of the collector or along its length.

The tubular member is preferably flexible along its length to allow for the passages in the collectors no longer being co-axial as they deflect relative to each other. The tubular members are preferably formed from reinforced rubber or reinforced polymer such as polyethylene. The tubular members may also be provided with internal windings to resist radial expansion of the tube. Alternatively, the tubular members may be provided with partially spherical ends to ensure a seal is maintained whilst being able to pivot relative to the collector sections.

In order to tune the collector to the desired natural frequency so as to equate to that of the prevailing waves, the collector is preferably placed under an axial compressive load in use. This may be achieved by using one or more tendons or cables running down the inside of the collector and anchoring the cable to the ends of the collector. The cable may then be put under a tensile strain to apply a force along the longitudinal axis of the collector. Preferably, the tensile strain can be modified in use. This allows accurate tuning of the collector in varying weather conditions and also allows the collector to be detuned during extreme weather conditions to reduce the possibility of the collector becoming damaged.

Whilst the collectors may be of uniform cross-section and weight distribution throughout the collector, the collector is preferable provide with an enlarged nose and/or tail. The collector may be physically wider or deeper as well as having modified weight by adding extra weight or even buoyancy. The addition of such nose or tail sections enhances the performance of the collector, allowing more power to be collected from a smaller collector. They also aid tuning of the device and can help to restrict power absorption under extreme conditions to protect the device from damage.

The collectors provide a pressurised fluid output from the pump pipes. This may be used to drive a turbine to generate electricity. The turbine used is preferably a Pelton turbine. The flow control valves are preferably arranged to be controllable to maintain the power output to the generator throughout the wave cycle and also during calmer or rougher periods of wave activity. This arrangement also helps to maintain a suitable back pressure in the headers to allow the pump pipes to operate efficiently and at the predetermined tuned frequency. If the back pressure is incorrect, the force between the sections will not be correct and the resonant frequency of the device will be changed. This will affect the stability of the collector as well as its ability to collect power from the waves efficiently. The flow control is preferably automatic, being responsive to the head in the feed from the pump header. A bellows arrangement can be used to sense the pressure in the feed pipe and control the spear valve of the Pelton turbine to automatically adjust the flow and hence the jet velocity, if it is incorrect due to a variation in the flow from the collector pumps.

The passages are preferably connected to a header via one-way valves which allow fluid to pass from the plurality of passages and connectors into the header when the pressure in them exceeds that of the header. The header is preferably maintained at a pressure between 30 and 100 bar and more preferably in excess of 50 bar. The header is also provided with an outlet to provide high pressure fluid to be used as required, e.g. to feed a turbine for a generator or a desalination plant, or for dosed sea water injection into oil wells terminated at the seabed.

The outlet of the header may be connected to an accumulator. This allows the variable flow rate produced by the pump pipes to be smoothed out to provide a more constant pressure and flow from the collector. The accumulator can be provided by a length of pipe, attached to the outlet of the collector, containing a volume of air. The pipe is preferably a steel pipe with an internal rubber air sack. The pipe may also comprise a concrete jacket to act as ballast to retain the accumulator on the sea bed and also to protect the accumulator pipe.

To provide a highly efficient system, the collector needs buoyancy, a sufficiently large diameter and sufficient displacement in order to convert wavepower into high pressure fluid flow. The length of the collector is preferably more than half a wavelength of the prevailing waves. The length is preferably selected to be less than the wavelength of the prevailing waves. In addition, the collector is preferably arranged to have adequate strength and stiffness to ensure that elastic flexural waves within it travel at the speed of incident waves. The collector is preferably arranged to flex only in a vertical plane.

By selecting the length of the collector accordingly and also the compressive load applied along the length of the collector, the collector can be tuned to the prevailing wave frequency. In this way the collector is coupled to the waves in order to extract the maximum amount of power from the waves passing by the collector.

Since the collector requires no fixed reference, it is capable of operating in both offshore and coastal sites. It is particularly convenient to locate the collectors in shallow water close to shore, for example up to a depth of about 50 metres. This allows the high pressure fluid generated by the collector to be carried by a pipeline back to a fixed installation on the shore where the equipment required to utilise the pressurised fluid is more conveniently located. It also permits mobilisation of greater bending strains and pumped fluid displacements arising from the reduced wavelengths and increased wave amplitudes at given wavepower fluxes in shallow water. This clearly allows a greater output of pumped fluid for a given wave flux when compared to locations offshore.

Additionally, the collector can be used in a vertical configuration by collecting energy from the surge action as waves pass over it. This is particularly useful for offshore applications.

The present invention overcomes the problems of previous systems by providing a low cost structure which requires little maintenance but, where required, such maintenance can be easily carried out due to the simplicity of the structure. Furthermore, by mounting the generating or processing equipment away from the collector, either on the shore or on a separate fixed structure, the complexity or the collector structure is minimised. This ensures less chance of malfunction and less maintenance. Coupled with this, the structure of the present invention is capable of efficiently collecting the wavepower presented to it. The net result of this is that the collector of the present invention is able to provide power continuously (assuming waves are present) at a cost which compares favourably with traditional types of power generation.

The present invention will now be described in more detail by way of specific examples with reference to the accompanying drawings in which:-
Figure 1 shows a schematic representation of a collector on the surface of a body of water;
Figure 2 shows a schematic view of the present invention;
Figure 3 shows a schematic cross-sectional view through the construction shown in Figure 2;
Figure 4A shows an enlarged view of an olive in the construction of Figure 2 when the olive is in the uncompressed condition;
Figure 4B shows an enlarged view of an olive of the construction of Figure 2 when the faces of the sections are close together and the olive is under compression;
Figures 5A and 5B show cross-sectional and side views of the present invention clearly showing the buoyancy cylinders used to provide buoyancy to the collector;
Figure 6 shows a modified construction of the present invention;
Figures 7A-7C show views of the construction shown in Figure 6;
Figure 8A is a view of an alternative arrangement of the present invention;
Figure 8B is a partial cross-section along A-A in figure 8A;
Figure 8C is a partial perspective view of the connector shown in figure 8A;
Figure 9A shows a schematic view of a second aspect of the present invention;
Figure 9B shows an enlarged view of the end of one tubular member of the construction of Figure 9A;
Figure 9C shows a further enlarged view of the sealing on a tubular member of the construction of Figure 9A;
Figures 10A-10C show an example of a tyre-shaped member usable in a further modification of the invention;
Figure 11 shows an application of the tyre-shaped member of figure 10;
Figure 12 shows an alternative application of the tyre-shaped member of figure 10;
Figure 13 shows a second embodiment of the present invention;
Figure 14 shows a schematic representation of a section according to the second embodiment;
Figure 15 shows an enlarged view of the connectors and externally mounted passages as applied to a construction of the second embodiment;
Figure 16 is a perspective view of an
Figure 17A is a cross section through the connector of figure 16;
Figure 17B is an end view of the connector of figure 16;
Figure 18A is a cross section through an alternative connector;
Figure 18B is an end view of the connector of figure 18A;
Figure 19 shows a perspective view of a collector having modified nose and tail sections;
Figure 20 shows a perspective view of another alternative collector having modified nose and tail sections;
Figure 20A shows a detail view of the connectors of the collector of figure 20;
Figure 21 shows a schematic view of a Pelton turbine for use with the present invention; and

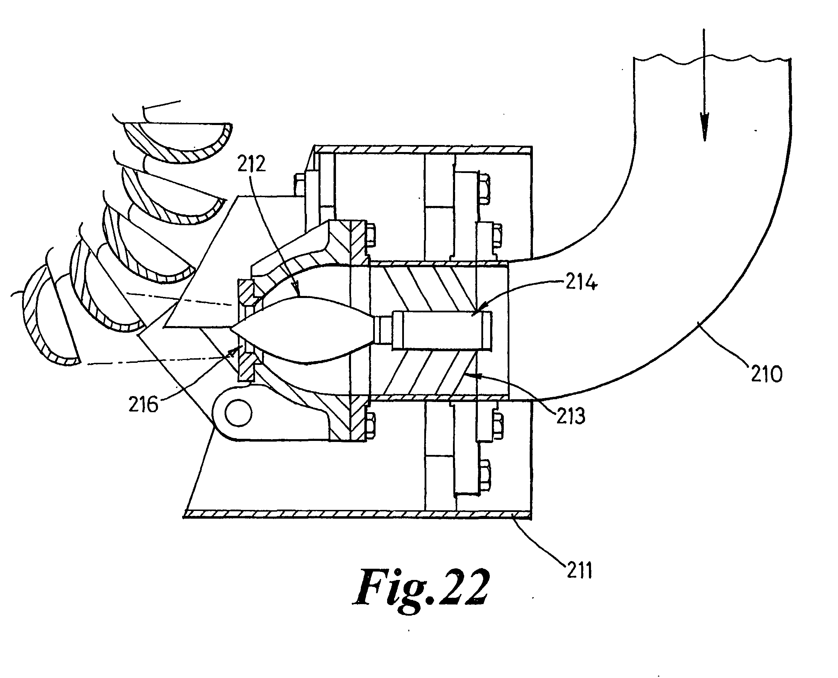

Figure 22 shows a detail view of the spear valve used with the Pelton turbine.

The present invention provides a floating flexible beam structure formed from a plurality of sections each comprising one or more passages. The collector structure formed in this way is floated on the surface of the sea such that as waves pass by the collector, the various sections move relative to each other, varying the spacing between the passages provided thereon. By providing appropriate connectors between each of the sections this variation in the spacing between the sections can be used to vary the overall length of a passage defined by the connectors and other channels in the respective sections causing an increase or decrease in pressure of a fluid contained within. As waves repeatedly pass by the collector structure, the structure flexes in one direction and then another causing this repeated change in length to provide a pumping action. This pumping action is used to provide a source of pressurised fluid which can then be utilised, for example for power generation. This may be by feeding the high pressure fluid into a turbine, such as a Pelton wheel turbine, to provide mechanical power which may in turn be used to drive a generator to provide electrical power. Alternatively, the pressurised fluid may be used for other purposes depending upon the application. For example, pressurised sea water may be used in a permeable membrane desalination process to provide fresh water. Also, the pressurised sea water may be used in oil extraction for pumping into oil wells to replace and displace oil in oil bearing rocks.

Various arrangements of the present invention will now be described. Although these arrangements operate in a similar manner, the arrangement and construction of the sections is different.

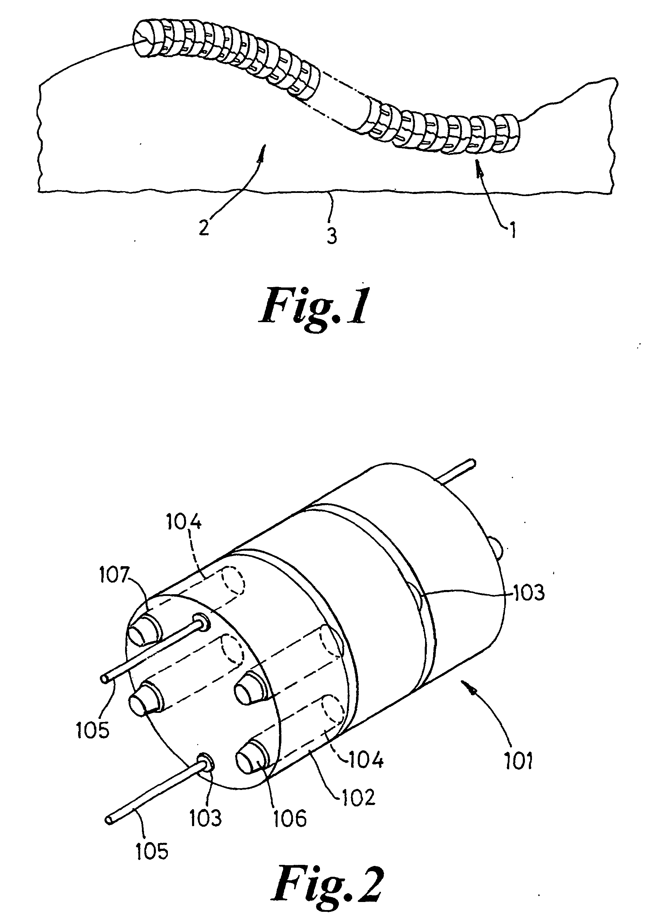

Figure 1 shows a schematic representation of a collector 1 floating on the surface of the sea 2. The bed 3 of the sea is shown for reference.

The collector is formed by a number of large diameter sections arranged end to end to form an elongated compressed spine shaped body. In the arrangement shown, the sections are circular in cross-section but they may be other shapes such as a D-shape or a rectangular shape. The cylindrical body is arranged to float at the surface of the sea or lake and is tethered to hold it in position. The collector is arranged such that its axis lies generally perpendicular to the wave front such that the body oscillates with the wave, causing the body to flex. Connectors between each of the sections provide one or more continuous pump pipes running along the collector. The flexing of the collector body causes the length of the plurality of pump pipes to increase or decrease repeatedly. This causes the axial length of each of the pump pipes to be cyclically varied. The pipes are filled with a hydraulic fluid, usually sea water, and the variation in length and hence volume of the pipes acts as a pump for producing a flow of pressured fluid.

Figure 2 shows a more detailed view of an exemplary collector 1. The collector sections are formed as hollow structures which are at least partially ballasted, preferably so that 60% to 90% of the cross-sectional area is submerged. The interior of the collector sections are normally sealed although they may be flooded with sea water.

In order to obtain the maximum possible power from a wave, the collector needs to be tuned so that its natural resonant bending frequency corresponds to that of the incident waves. Clearly the frequency and amplitude of the waves on the water surface will vary according to prevailing conditions and it will be necessary to select a resonant frequency for the collector which lies in the range of wave frequencies which occur in the location where the collector is to be deployed. In order to "tune" the collector to the appropriate frequency, the entire body of the collector is put under a compressive load. This compressive load is provided by one or more cables 105, two are shown in figure 2, connecting to the ends of the collector. The cables are tensioned so as to pull the ends of the collector towards each other to compress the body of the collector in the axial direction. By appropriately selecting the tension in the cables, the compressive force along the collector body can be set and the collector can thus be tuned. The applied compressive loads is resisted by the buffers between the sections. The buffers may be the connectors themselves and/or separate members. Consequently the sections are held against each other under a compressive load. Consequently, no hinge or other attachment is necessary to hold the sections together. This further means that by using resilient buffers to hold the sections apart, the whole structure is less rigid and therefore more able to withstand extreme conditions which is an important factor in permanent offshore structures. The compression provided by the cables causes a tends to induce buckling in the beam. Under calm conditions, the collector remains straight but when waves are passing by the collector, this buckling tendency helps to maximise the bending of the collector. The greater the bending of the collector, the more each section is deflected relative to its neighbour and hence the strain as each wave passes produces more pumped fluid.

Figure 2 shows part of a collector 101 which is formed from a plurality of rigid sections 102 which are spaced apart by flexible spacers 103 and connectors 106, referred to as olives. As shown in Figure 2, each section is formed of a substantially cylindrical body provided with passages 104 in the interior of the body. The cylindrical sections are preferably arranged so that their length is less than their diameter so as to have a disk like form. This provides greater displacement for a given length of section.

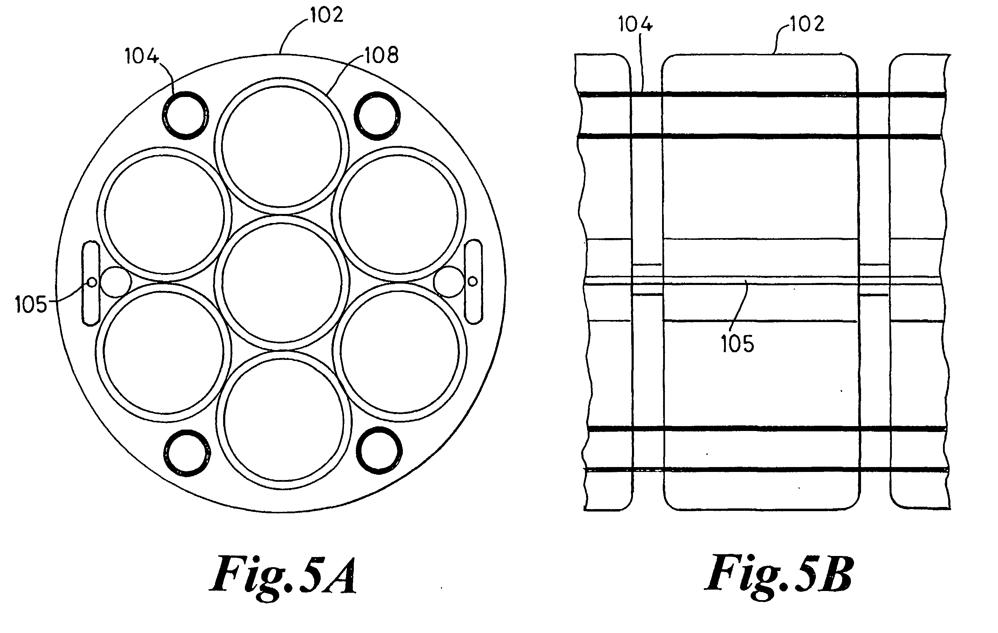

The sections of figure 2 can be formed from a thin outer concrete wall which is formed from centrifugally cast concrete. The concrete outer walls are relatively thin and are preferably subsequently wound with steel wire under tension. This maintains a continuous radial compressive force on the concrete sections. In the interior of each section there are provided one or more polymer, e.g. high density polyethylene (HDPE), buoyancy cylinders 108 having closed ends. Figures 5A and 5B show cross-sectional and side views respectively of such a structure. The remaining space in the interior of the sections allows the passages to be inserted. The passages are then embedded in more concrete in order to provide a substantially unitary structure. In an alternative construction, the sections may be formed with an annular outer wall, with passages embedded therein. The tubes for the tendon cables may either be also embedded therein or pass through the central part of the section.

As shown in Figure 2, the sections are preferably provided with four passages arranged around the collector sections 102. The passages 104 are preferably located close to the outer periphery of the sections in order to utilise the maximum displacement between the sections as a wave passes by the collector. In operation, the passages will be operating at relatively high pressures and it is important that radial expansion of the cylinders is restricted in order to maximise the hydro-dynamic efficiency of the collector. The passages are therefore preferably formed from steel. This coupled with them being embedded in concrete helps to provide good resistance to radial expansion of the cylinders.

As indicated above, the collector is formed from a plurality of sections which are held together longitudinally with a pair of cables or tendons 105. These tendons 105 are passed through each of the sections and post-tensioned in order to hold the sections firmly together and also to tune the collector according to the wavelength of the prevailing waves. The tendons are placed symmetrically on a plane through the neutral axis of the collector but spaced apart towards the periphery of the sections 102. One or more large steel laminated HDPE spacers 103 are provided around the tendons between each of the sections in order to space the sections apart. These spacers, along with the connectors between the sections act as the buffers to hold the sections apart under the load applied by the tensioned cables. The sections may be typically spaced apart by up to 1 metre. The spacers 103 are therefore preferably laminated with steel washers. The laminated structure of the spacers helps to maintain their integrity under the extreme operating loads of the collector. When the collector is floated on the water, it is preferably arranged so that the two tendons are in a horizontal plane. This allows the collector to bend significantly along its longitudinal axis, i.e. in a vertical plane, whilst still being restrained from bending in a horizontal plane.

The collector, is provided with valves (not shown) for collecting the pressurised fluid, produced by the pump pipes, in a header. As the collector flexes, some of the pump pipes are compressed and suffer an increase in pressure in the fluid within them. As the pressure rises above the pressure in the header, the valves open and fluid is discharged into the header. As the collector bends in the opposite direction, the pressure in those pump pipes drops and an inlet valve opens drawing fluid back into the pump pipes to replace that expelled during the pumping cycle. This process continues repeatedly in each of the pump pipes as the waves pass by the collector.

The ends of the collector are typically provided with a support member such as a spider to provide a connection for tensioning cables, mooring ropes and an outlet pipe.

As the flow generated by each of the tube pumps will not be constant, there will also be a fluctuation in the amount of flow generated by the collector. This variation in the amount of hydraulic fluid generated throughout the cycle will cause a variation in the pressure in the header and consequently the pressure generated by the collector. Where the pressurised fluid is being used to drive an electrical generator or other equipment requiring a constant flow and pressure, then any variation in the pressure is disadvantageous. Although electronic systems can be used to filter variations in the voltage generated by a generator in order to overcome the variation in supply pressure, they cannot store energy and are usually expensive to buy and maintain.

The outlet from the high pressure header can be connected to an accumulator (not shown) for smoothing out variations in the pressure generated in the header. The accumulator is effectively an air filled volume which, by virtue of air being a compressible material, acts as a reservoir to receive pressurised fluid when it is being supplied by the pump pipes and maintains the flow to the generator equipment, or the like, when the pump pipes are not providing pressurised fluid. This ensures that the outlet pressure from the collector is maintained at a substantially constant level. The accumulator is conveniently provided by a length of steel pipe connected to the main high pressure outlet from the header. The pipe is selected to have sufficient length and bore to provide a volume according to the fluid flow generated by the collector.

Additional steps can be taken to compensate for both long term and transient variations in the pressure generated by the pump. One method is to control the feed of pressurised fluid to the turbine used to drive the electrical generator. This is described in more detail below.

In this embodiment, the design preferably has twenty or more individual sections which are in the range of 5 to 8 metres in diameter and more preferably around 6.5 metres in diameter. The length is preferably less than the diameter of the sections and usually between in the range of 3 to 6 metres. Ideally, the sections are around 4 metres long.

Of course in a different environment or with different requirements different combinations may be possible

When the pumps are filled with water, the balance of the concrete mass and the internal buoyancy is such that the collector as a whole floats in the water such that 60%-90% of the external volume is submerged. The axial elastic bending stiffness is also arranged to be relatively small so that the natural period of bending oscillation is in the region of 7-12 seconds, matching the period of incident waves thus avoiding the need for additional longitudinal strut action. Of course this can be modified according to different incident wave periods when the collector is located in different locations with different prevailing conditions. The natural period of the collector when afloat is governed, not only by its buoyancy distribution, but also by aggregate elastic bending stiffness in the axial direction and mass, including entrained water mass. Thus reducing the bending stiffness increases the natural period. This can be achieved by applying a load through the longitudinal tendons attached between the ends of the collector.

The arrangement of the present invention is advantageous in that when adjacent sections reach the limit of bending compression displacement, for example during the high waves of a storm, the connectors progressively provide increased resistance to further movement by virtue of their volumetric compression and thereby prevent shock contact between the sections. This avoids the need for additional protection, such as buffers or fenders or allowing additional spacing, to prevent contact between the sections. This clearly avoids the potential for damage to the sections caused by impact. In addition the connectors act to provide a spring function which counterbalances the compressive strain applied by the cable and stabilises the overall structure. This also helps with the tuning of the collector.

In an alternative to above described construction, rather than using HDPE buoyancy cylinders or cavities, the individual sections can be formed homogeneously by completely filling the interior of the section, other than the passages using a gas concrete (or other low density material) of a low specific gravity of about 0.47. Gas concrete of this type would, for instance, use sand and Portland cement with a lean mix addition of aluminium powder. This mixture, with controlled addition of hot water, would induce expansion in the concrete due to the generation of a large number of evenly distributed small closed pores caused by the reaction between the cement and aluminium to generate both hydrogen and steam. In addition, the heat of reaction would supplement the temperature in the mixture and enhance cured strength. This increased temperature would also be maintained during curing by the reduced thermal conductivity of the aerated concrete allowing the temperature to be maintained until the concrete has cured.

This process would result in some thermal contraction relative to the dense concrete skin during final cooling and would induce tensile residual stress at the interior. This stress would be insufficient to cause cracking of the gas concrete because it has a low elastic modulus but would be sufficient to put the outer concrete skin into hoop compression. This compression would allow the tensioned outer steel wire winding to be dispensed with, providing a considerable saving in the overall cost of the collector. The end faces of the sections are preferably protected by a coating to prevent ingress of sea water whilst afloat and also to protect them structurally. This coating can be formed of reinforced resin which would also have the advantage of protecting the outer skin of dense concrete against local cracking and damage.

During construction, the gas concrete core is preferably added to the inside of the dense concrete skin using a centrifugal moulding process. The outer skin of dense concrete would have end plates put on to define the interior space. The passages and hoops through which the tendon cables pass would be precisely held in position and then concrete would be inserted around them. The whole arrangement would be rotated to ensure distribution of the concrete around the circumference of the section. After an initial curing period, the end plates could be removed from the mould, usually within a few hours and after further curing the outer cylindrical part of the mould can be removed.

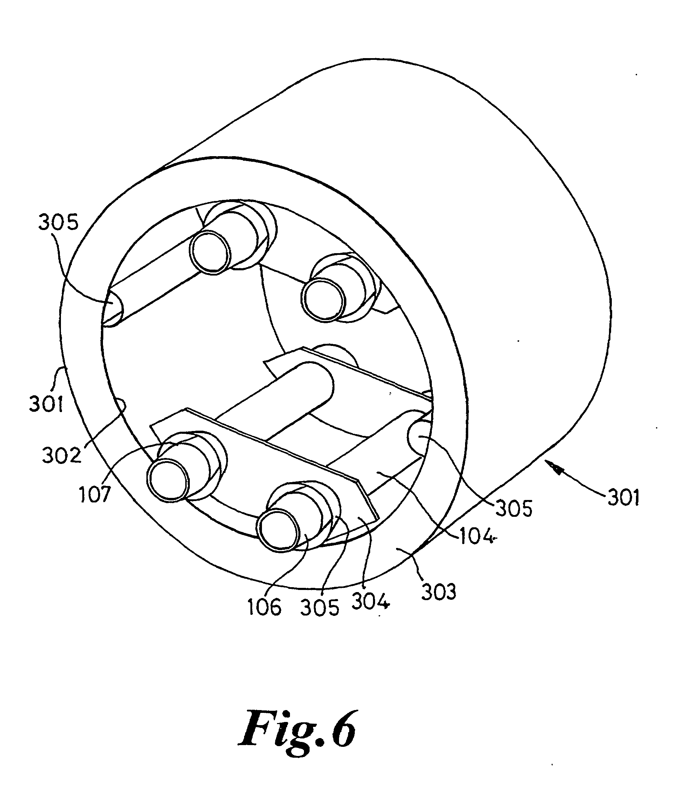

A further alternative for the construction of the collector is provided by forming the outer wall using a composite structure, such as 'Bi-steel'. Such a structure would comprise a pair of steel plates retained in a spaced apart configuration by an array of transverse bars to form hollow panels. These panels are then attached to each other to form the annular outer wall of the section. Of course each section may be formed from a single panel formed using cylindrical steel plates. These panels are then put into position and may be filled with concrete, preferably low density concrete. In this way the steel portions of the construction provide resistance to tensile strains whilst the inner concrete filling provides resistance to compressive loads. Figure 6 shows a construction formed in this way. The outer wall of the collector is formed of a sandwich of two steel plates 301 and 302 separated by a plurality of bars with a filling of concrete 303 therebetween. This arrangement provides a very reliable yet strong and easily constructed structure. Alternatively, the panels may be filled with ballast instead of concrete.

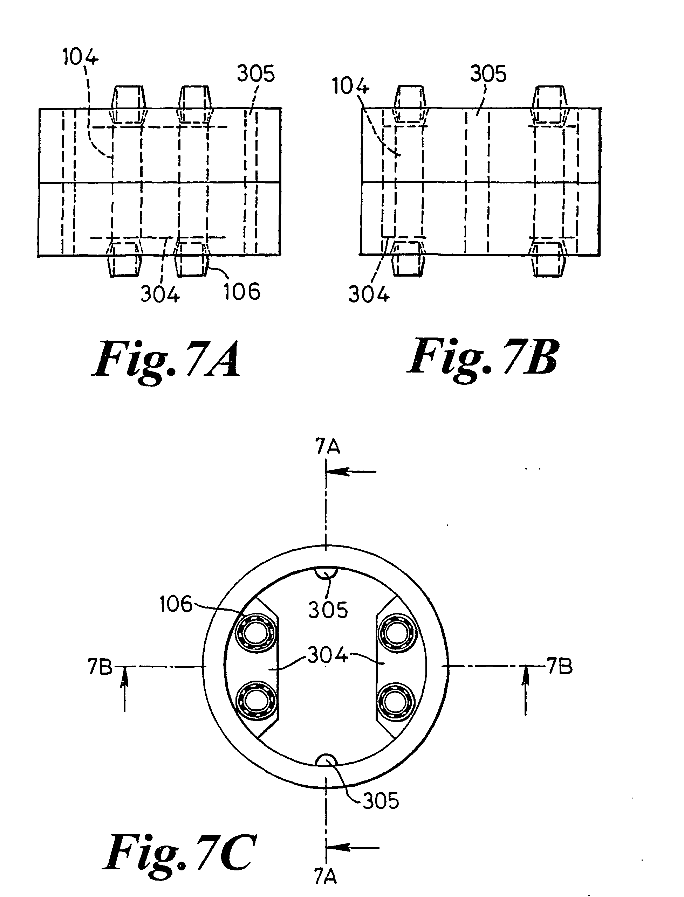

Figure 6 also shows alternative constructions of the inner parts of the collector of the present invention in which the passages 104 are held in place by plates 304. The passages 104 are provided with a diverging end 305 into which the olives 106 are inserted. Tubes 305 are also provided for the steel tendons 105 (not shown). Figure 7C shows an end view of the construction shown in Figure 6. Figures 7A and 7B show cross-sections through this construction.

An alternative construction of a collector according to the present invention is described below. This construction is similarly made from a number of large diameter sections arranged next to each other to form an elongated collector body. The collector is arranged to float on the surface of the sea or a lake such that it is partially submerged. The sections are preferably 50% submerged.

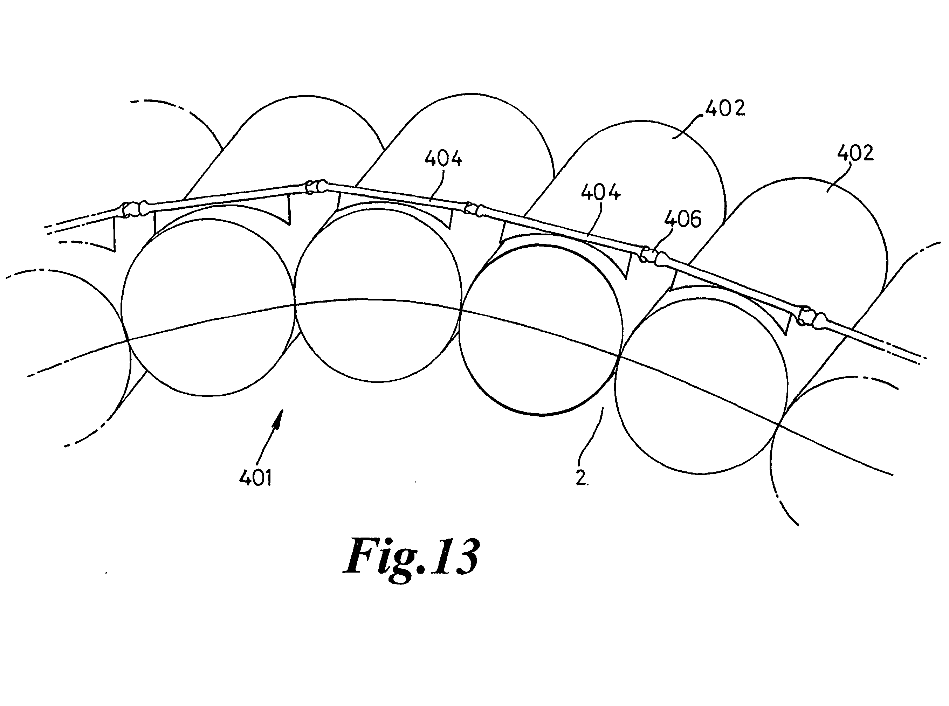

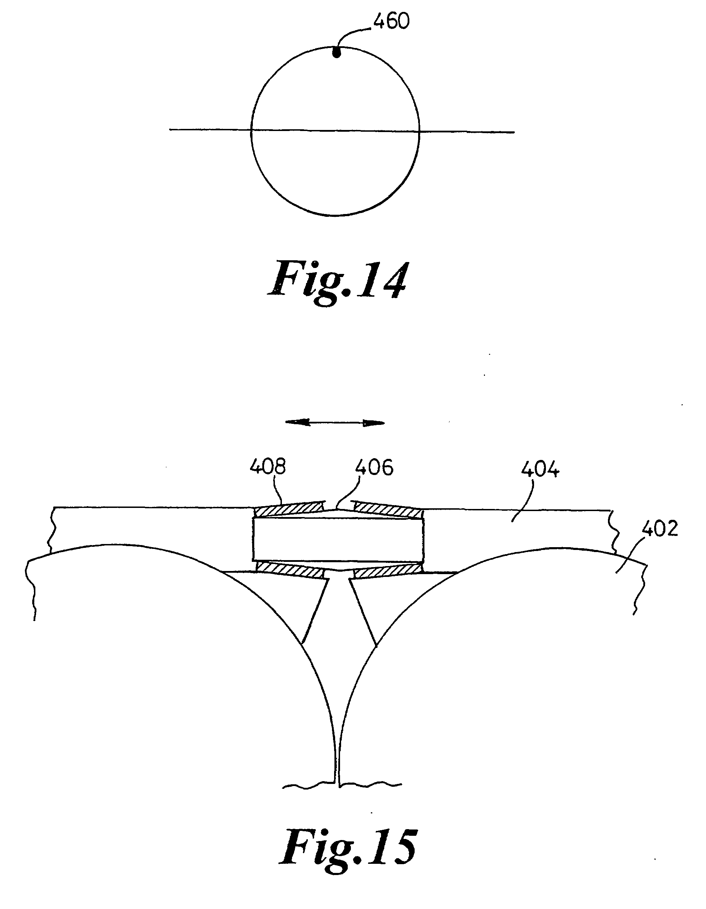

Figure 13 shows a representation of such a collector 401 floating on the surface of the sea 2. The collector is formed from a plurality of sections 402 which are generally cylindrical. The sections 402 are arranged with their axis generally parallel to the axes of the adjacent sections. Each section is pivotally attached to the adjacent section such that they can pivot or roll relative to each other. In this way the passages 404 mounted on each section are caused to move towards or away from the corresponding passage on adjacent sections (see figure 15). As the mouths of the passages come towards each other, the connectors 406 provided between the mouths of the corresponding passages are, in the arrangement shown, axially compressed. In this way, the overall length of the passages and connecting means is reduced. The connectors 406 are arranged such that the increase in internal pressure does not cause radial expansion of the connecting means. In this way, the overall volume in the passages and connecting means is reduced causing an increase in pressure in the fluid contained within. This pressurised fluid can then be extracted to be put to useful work.

Although Figure 13 only shows a single passageway provided on each section, it is envisaged that two or more passages may be provided on either or both of the top and bottom of each of the sections.

One important aspect of the present invention is arranging the collector to have the frequency tuned to that of the incident wave frequency. In the first arrangement described, this is principally achieved by modifying the tension applied to the collector using the tendon cables. However, with this arrangement, tuning in pitch rather than heave allows the structure to dispense with the need for ancillary longitudinal tension to be applied. The collector can still be tuned by arranging the centre of gravity of each section to be offset from the centre of the section. This is preferably achieved by providing a mass 460 (see figure 14) offset from the centre of the section which is otherwise generally uniform. This mass may be provided in any number of ways. For example additional offset mass could be achieved by providing a different number of passages on the top than on the bottom of the collector sections. Alternatively, ballast may be provided in the upper part of each section. It will be appreciated that the provision of this top mass has a destabilising effect on the sections which has the effect of increasing the natural period of the whole collector.

When afloat, preferably at half depth, the hydro-dynamic conditions for linearity and good capture can be met by providing relatively flat ends to the cylinders. Furthermore, by ensuring that the sections are longer than their diameter, the sections have good transverse stability, strength and appropriate displacement.

The sections can be held together in a number of ways, although it is preferred that a pair of light longitudinal cables passing down the length of the collector retains the assembly in one piece. In this embodiment, the cables are not required to tune the structure and so the tension in them can be considerably less than in the first embodiment. This allows the cables to be smaller and lighter and also reduces complexity, cost and maintenance. However, whilst the cables are not required to tune the collector, it is still possible to provide some tuning of the collector using the cables nonetheless. Even so, this would still require considerably lower tensions in the cables than in the construction of the first arrangement.

With this construction, the collector can flex in a horizontal plane as well as a vertical plane and this can provide additional power.

The sections can be formed relatively cheaply as concrete structures. The cylinders can be spun cast to form the main circumferential wall of the cylinder. Then, when the main structure has been formed, the two ends can be cast on as flat members without any need for supporting framework. In order to provide strength to the sections, post stressing cables may be applied to the outside of the structure in a helical arrangement. The flat ends of the sections would be intrinsically post-compressed without extra cables. The external diameter is preferably around 5 metres and the sections are preferably around 7 metres long. The thickness of the circumferential walls is preferably around 0.3 metres and the thickness of the end sections is preferably around 0.5 metres.

The arrangement of the passages and connecting means will now be described in relation to both the arrangements described above. The connectors can be of two distinct types. The first type uses compressible connectors which are firmly supported in a mouth of the passages. As the sections displace, the volume of pump pipe is reduced by reducing the length and hence the volume of the connector. The second type of connector does not need to be compressible because it slides freely within the mouth of the passages. Thus as the sections move relative to each other, the connector slides into the passage. This has the same effect of reducing the overall length of the pump pipe without the connector changing shape at all. In both types, the important function is to allow the section s to move towards each other and reduce the length of the pump pipe without wasting any of the volumetric reduction by allowing radial expansion of the pump pipe, particularly in the connectors.

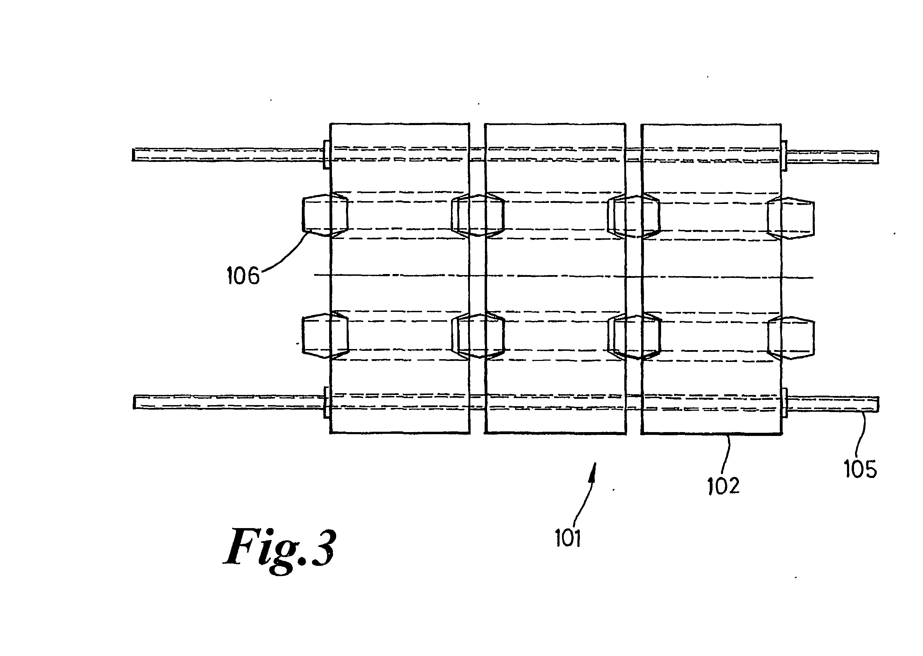

In the first type, the passages in each of the sections are arranged co-axially with those in the adjacent sections such that a continuous pump pipe is formed down the length of the collector through the passages and connecting olives. At each end of the passages there is provided a conical section such that the diameter of the passage increases towards its end to define a mouth 107. The mouths of the passages of facing sections define a recess into which an olive 106, 406 is inserted as shown in Figures 3 and 15.

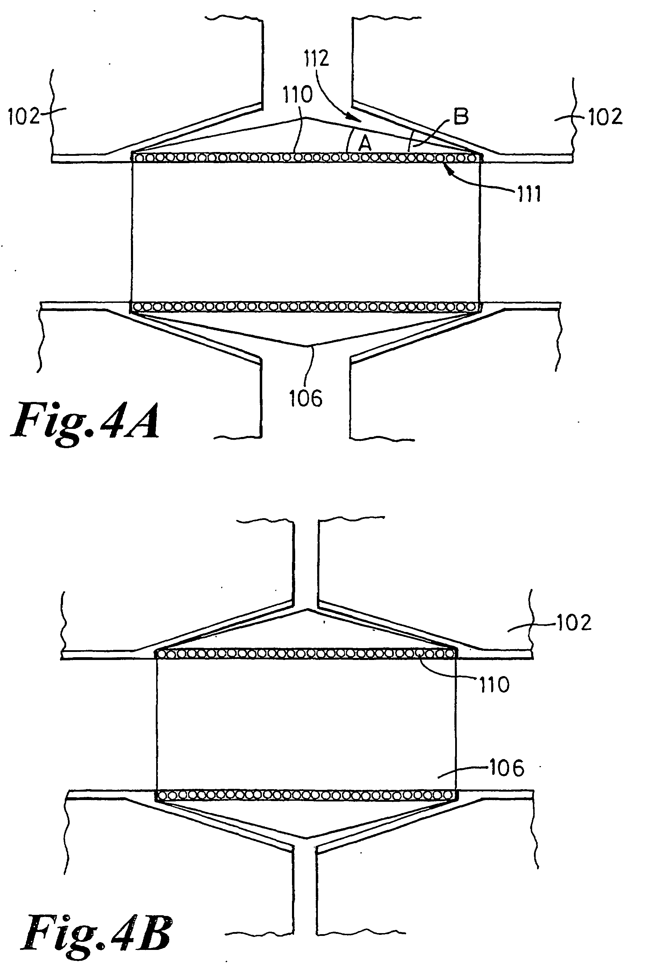

The olives 106, 406 are formed from reinforced rubber or reinforced polymer, e.g. polyethylene. They are generally cylindrical but their diameter reduces from a central portion towards the ends. They are provided with a substantially cylindrical bore through the centre. The olives contain an internal steel wire winding 110 as shown in Figure 4A. These windings 110 are arranged around the internal surface 111 of the central cylindrical bore through the olives. These windings provide an arrangement which permits considerable axial elastic compression but greatly restricts any radial expansion of the bores. As indicated above, radial expansion of the passages and the intervening olives leads to hydro-dynamic inefficiencies.

In Figure 4A, the angle of taper A of the outer surface relative to the longitudinal axis of the olive is less than the angle B of the diverging conical portions at the mouths of the passages in the collector sections. Thus when the olives are initially inserted in the recess formed between the mouths of cylinders of opposing sections, a gap 112 remains between the inner surface of the mouth of the passages and the outer surface of the olive. However, as the collector sections are moved closer together as shown in figure 4B due to wave action, the olives are compressed axially so that they deform, as shown in Figure 4B. The gap 112 provided between the mouths of the passages and the olives provide a region into which the outer part of the olives can radially expand as they are compressed. However, as indicated above, the diameter of the internal bore is maintained substantially constant due the windings 110.

In operation, the collector is placed in the water and partially submerged. As a wave passes by the collector, the collector tends to bend along its longitudinal axis causing the gap between sections to vary. As the collector bends in one direction, the gap between collector sections narrows on one side and widens on the other side. Then, as the collector bends in the opposite direction, the sections deflect in the opposite direction relative to each other such that the compressed olives are relaxed and the previously relaxed olives are compressed. This rhythmic compression and relaxation of the olives causes a cyclic reduction and increase in the axial length of the olives. As shown in Figure 4B, as the opposing faces of the sections moves together, the olive is deformed and reduced in length. However, as indicated above, the internal steel wire windings prevent radial expansion of the bore of the olive thus the volume of the internal bore of the olive is reduced. This reduction in volume of the bore causes a reduction in the overall volume of the pump pipe defined by the passages and olives and pressurises fluid contained therein. This pressurised fluid can then be bled off and utilised.

The olives are axially pre-compressed such that when the sections move apart the olives maintain a good seal with the mouths of the passages. The olives may be bonded 408 in position. Whilst a specific example of the shape of the olives has been described above, this is not the only form which could be used. For example, the invention could equally be applied to olives which had a cylindrical outer shape with a suitable cylindrical slot into which they could be inserted into the sections.

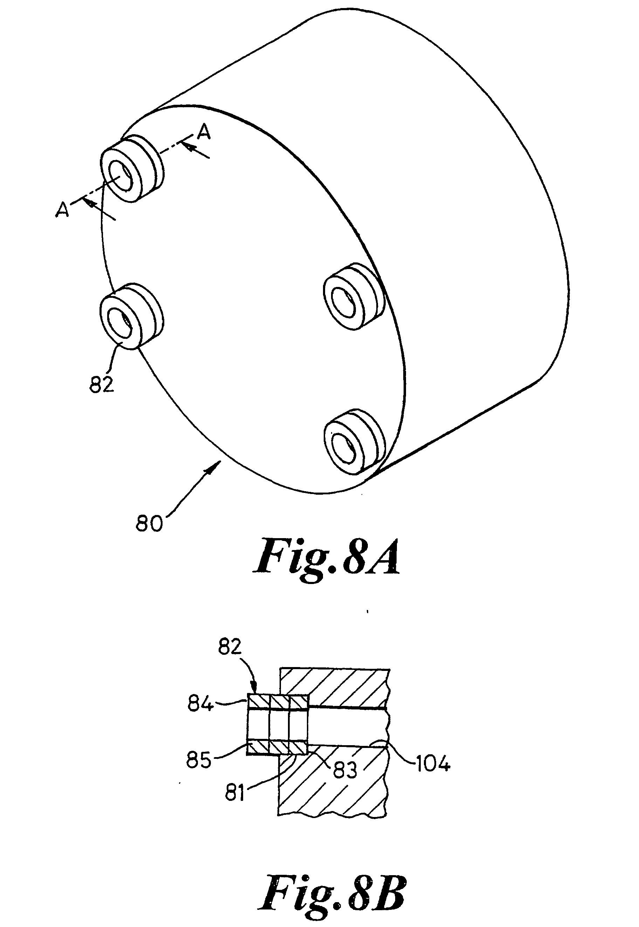

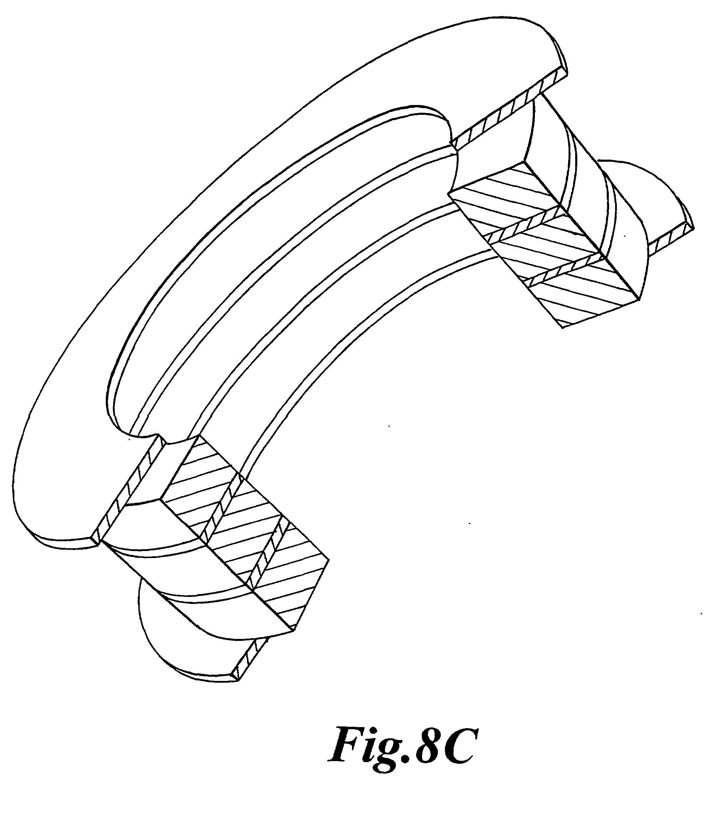

In an alternative construction 80 (see figures 8A and 8B), the olives are replaced with connection members 82 which are substantially cylindrical pipes. The mouths 81 on the sections at the end of each passage 104 are formed as a larger diameter section at the end of the passage. The cylindrical connection member is inserted into the larger diameter portion until its end abuts against the lip 83 where the diameter of the passage reduces. In this way the cylinder is retained in intimate contact with the sections. As the sections move toward each other, the connection member is axially compressed in much the same way as the olives described above. The connection members are constructed so that their internal diameter does not expand under pressure such that as their axial length increases, their internal volume is reduced and the fluid contained within is compressed. This resistance may also be provided by wire reinforcement as described above.

The cylindrical pipes 82 are arranged with a plurality of annular disc shaped steel plates 84 embedded in a reinforced rubber or polymer body 85. The discs help to reinforce the pipe against deformation or rupturing in use. Whilst the plates are shown as flat in figure 8B, then may be slightly conical in shape.

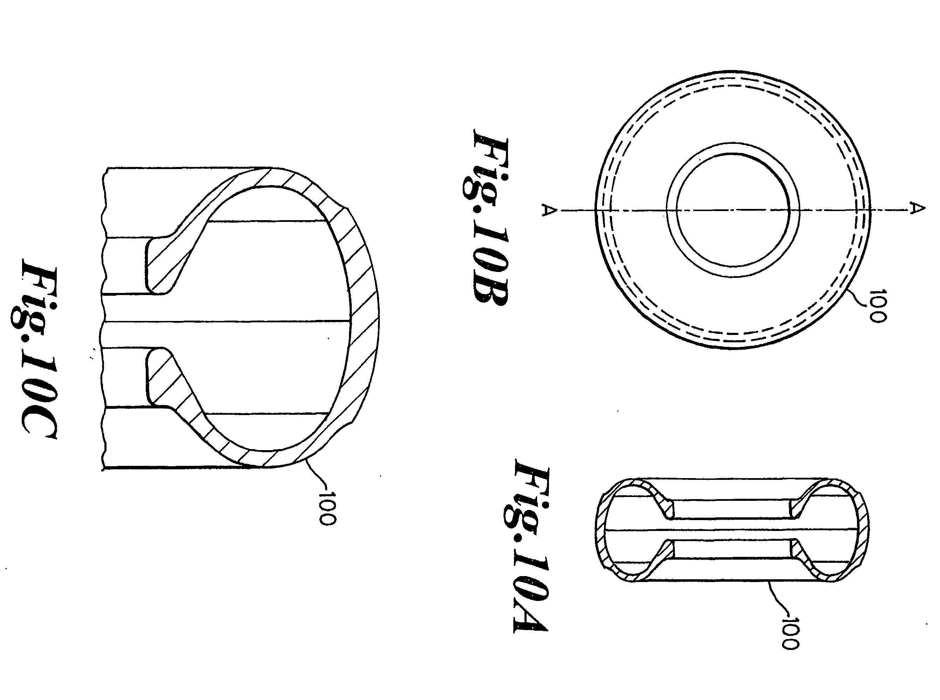

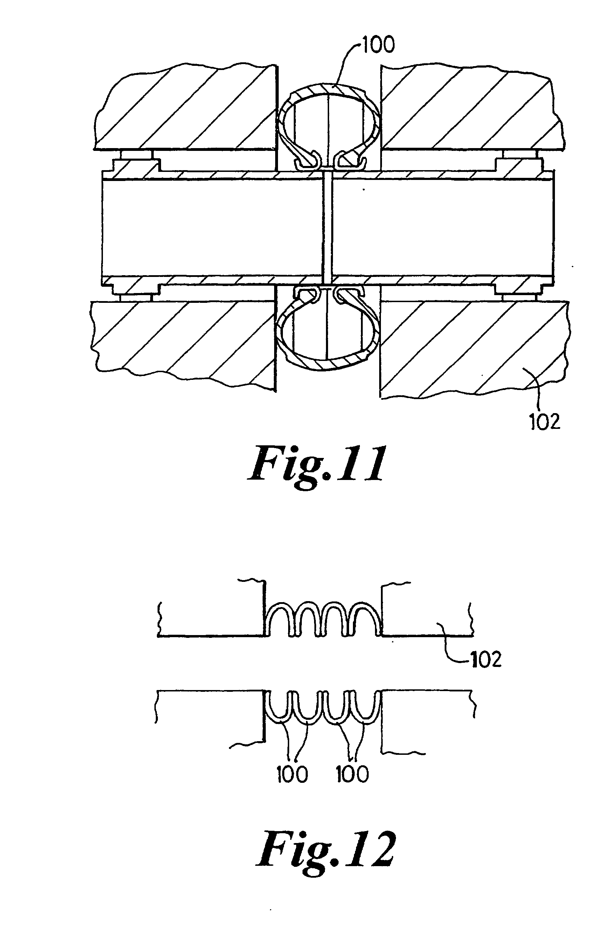

In a further modification, the olives or connecting members are replaced by one or more tyre-like structures 100 as shown in figures 10A to 10C. In this arrangement, the mouths of the passages through the sections 102 would be connected by a tyre or a plurality of tyres arranged side by side. Figures 10A to 10C show a typical high pressure tyre, such as an aircraft tyre, which can withstand the high pressures exerted by the collector. Figure 11 shows an example of a system utilising a tyre. In this construction, the tyre is squeezed between the sections as they move towards each other. This causes the volume of the tyre to be reduced and pressurised fluid to be pumped into the passages. Alternatively, the edges of the tyre may be attached directly to the side of the sections around each passage to form a seal therebetween. Similarly, where more than one tyre is used, the edges of adjacent tyres are attached to its neighbour to form a seal, see figure 12. In this way the plurality of tyres act like a type of bellows such that as the sections move together, the fluid is forced out of the body of the tyres under pressure. Although in the above description, tyres have been referred to as a convenient and readily available high pressure structure, it will be appreciated that other similar structures may be used which are not tyres.

In the structure of figure 11, the tyre is attached to the connector which is slideable within the passages. This arrangement therefore provides a dual pumping action with the sliding connector as the basic mechanism and the tyre providing a bellows type pumping action to further reduce the volume of the pump pipe.

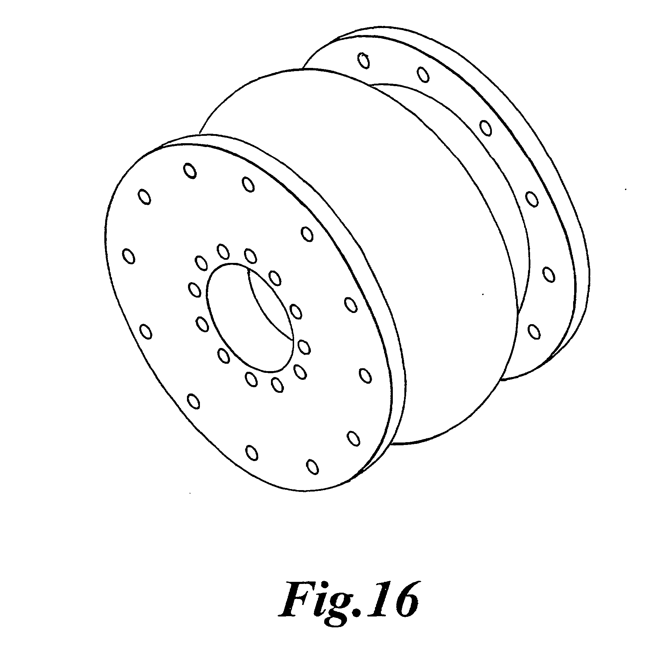

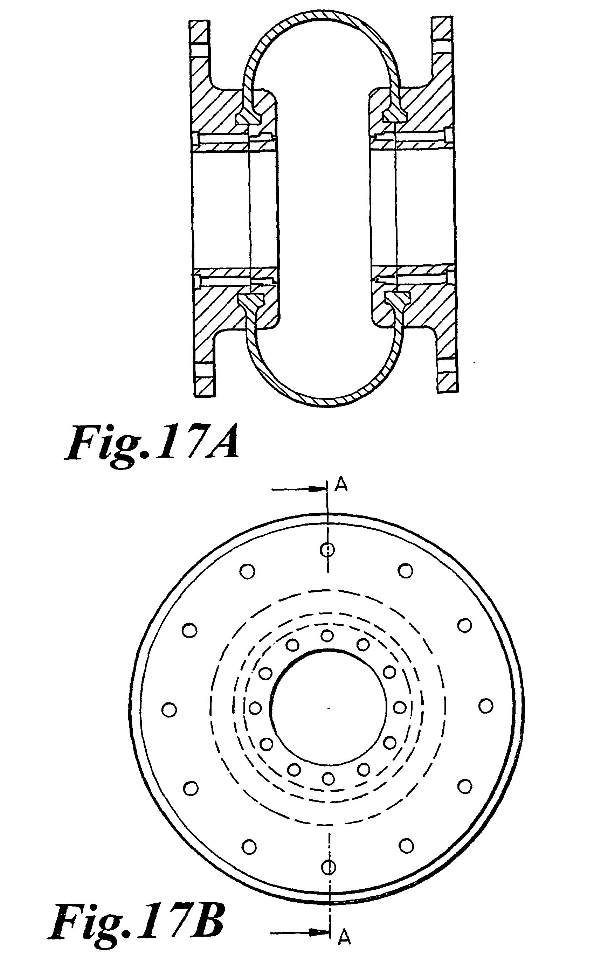

Figure 16 shows a perspective view of a practical arrangement for a connector using a tyre structure. The bead of the tyre is gripped between two plates on each side and each of the outer of those two plates is then attached to the respective sections. Figures 17A and 17B show cross sectional views of the structure of figure 16.

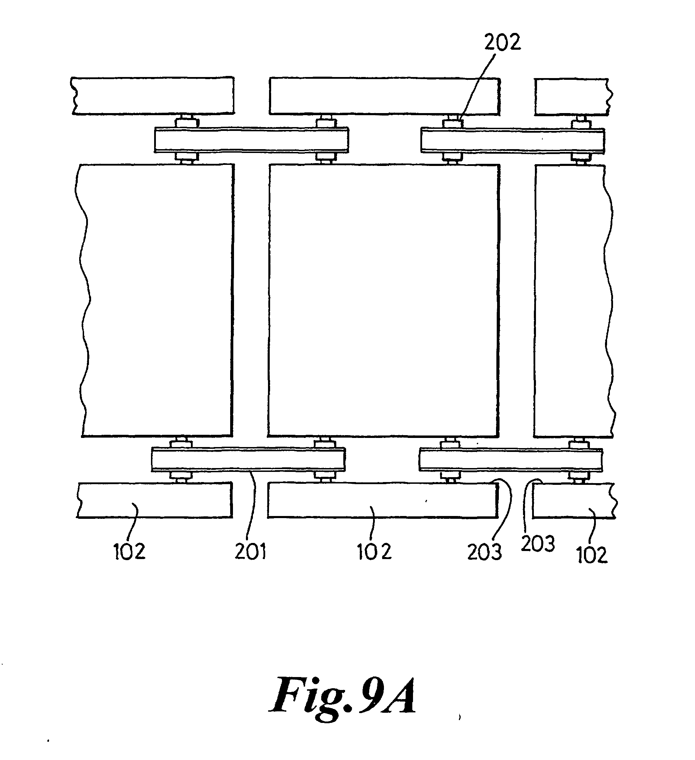

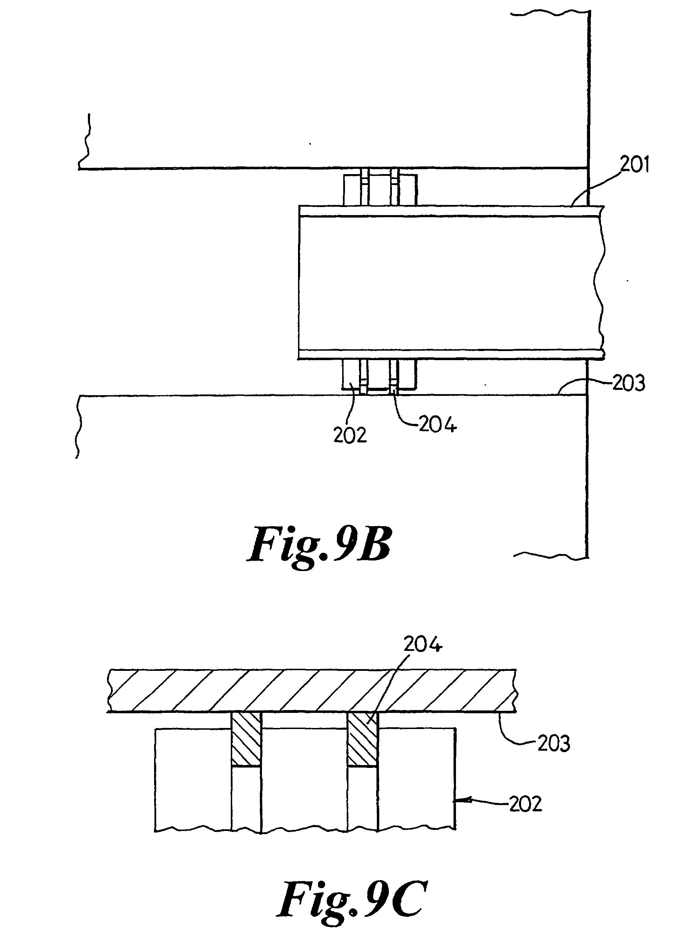

In the second type of connector, the olives are replaced by sliding tubular members 201, as shown in figures 9A to 9C. In this construction, the passages have a substantially constant cross section throughout their length and have a tubular member 201 inserted into each end. The tubular member bridges the gap between the mouths on opposing passages 203 effectively connecting them. Each tubular member is provided with a sealing section 202 at each end to form a seal to prevent fluid passing form the interior of the passages and the outside. The sealing section is provided with heavy duty hydraulic seals 204 as shown in figure 9C. The construction of the collector is otherwise similar to that of the arrangements described above. This includes the provision a plurality of passages arranged circumferentially around each section and having tensioning tendons.

With this type of connector, as the collector bends along its longitudinal axis, the sections deflect so that the gap between adjacent sections reduces at one side of the section and increases at the other side. As opposing sections move closer together, the ends of the tubular members 201 move axially into the collector sections, axially reducing the effective volume of the passages and compressing the pumping fluid in the passages. As described previously, this causes an increase in the pressure of the fluid which can be released through valves at the ends of the collectors.

The hollow interior of each tubular member allows pressurised fluid to flow from one passage to the next.

When the collector sections move relative to each other, the axes of their passages deviate from the corresponding passage in the adjacent section. In order to allow for this, the tubular members may be slightly flexible or their seals 203 may be arranged to work at varying angles.

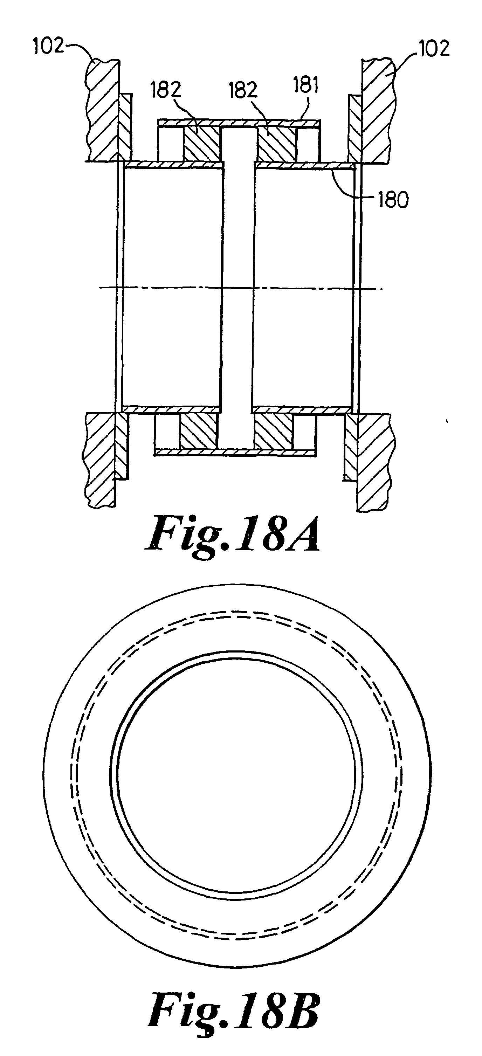

Fig 18A shows a further alternative construction of the connector. In this construction, at the ends of the passages in the sections, a short section of tube 180 or piping is provided extending away from the section. Provided concentrically around this is an outer tube 181 of larger diameter. This outer tube is of a length so that it overlaps the ends of the tubes 180 extending from the passages. Provided in the annular space between the outer tube 181 and each of the extension tubes 180, a rubber sealing ring 182 is provided. With this arrangement, as the sections move relative to each other, the two extension pipes 180 move towards and away from each other. The outer tube 181 remains generally centrally between the sections. Although there is relative movement between the extension tubes and the outer tube the seal ensures the seal is maintained. The seal may be left free to slide within the annular space or adhered to one or both of the extension and outer tubes. In order to minimise hydrodynamic loss, the seals 182 are preferably attached to the extension tubes. In this way, pumped volume is determined by the greater diameter of the outer tube. This arrangement similarly allows the length of the pump pipe to be reduced without and radial increase in the dimensions.

All the arrangements of connection members described above are useable on both the arrangement described above.

The previously described constructions have been described and shown as having similar shaped and arranged sections along their length. However, the nose and tail of the collector have significant effects on the operation of the collector and careful selection of the shape and arrangement (such as connection to tendons, weighting, tethering) can provide considerable benefits to the operation of the device. These can include reducing the required length of the collector for a given power extraction and a reduction in size at particular transverse locations. Careful selection of the nose and tail allows the collector to be self-limiting so that excessive power absorption during extreme weather does not damage the structure or integrity of the collector.

As the collector oscillates, it radiates a secondary wave. In the backward direction (downstream), the secondary wave looks like a reflection. In the forward (upstream) direction, the secondary wave tends to cancel the original wave which has passed the body without being totally absorbed. Thus the wave amplitude beyond the collector is reduced and thus power has been absorbed. A large collector amplitude means a large secondary wave and good power absorption.

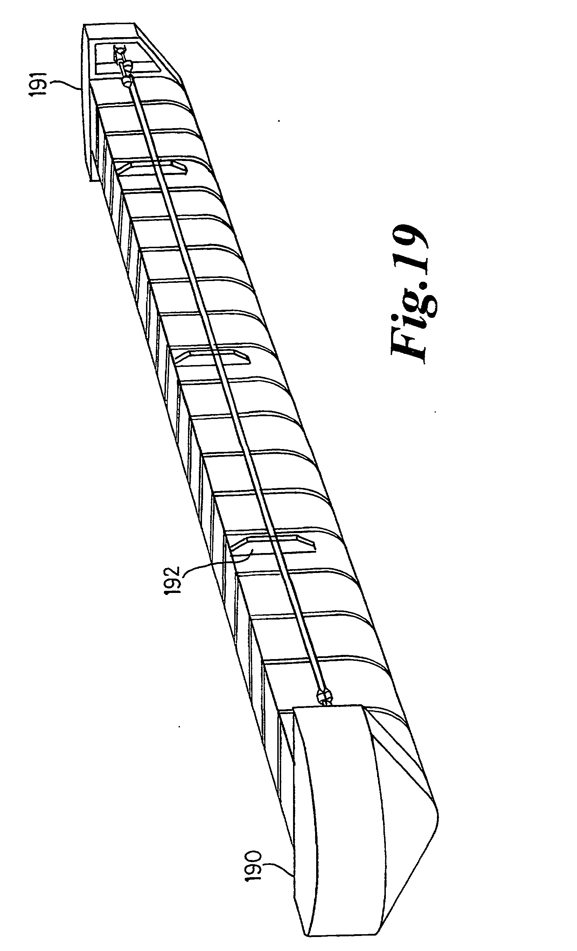

For collectors which have length less than the wavelength of the incident waves then travelling waves do not occur in the device. However, by fitting a modified nose and/or tail, the collector behaves as if it is longer than it actually is. The result is that more power can be extracted from the device than from a similar device without a modified nose or tail. Figure 19 shows an example of a modified collector in which the nose 191 and tail 190 sections are enlarged. In the example shown, the nose and tail are wider than the rest of the sections having a rounded leading edge.

The radiation wave produced by the modified tail moves upstream and gets absorbed along the collector length. But for the nose it radiates upstream away from the collector but the collector has to react against the incoming wave and reflect the energy back along the device, otherwise the joint at the head has to absorb all the power and the head may have to be larger to be of practical use. Thus, if it can reflect the energy back along the body, then the energy can be distributed and hence absorbed by the collector's normal power extraction mechanism. The nose and tail provide the body with something additional for it reach against.

The nose is shaped so that it responds to the incident wave sufficiently so that the wave can be passed on to be efficiently absorbed by the rest of the body. By careful shaping of the nose and pitch tuning, directional re-radiation can be used to optimise the absorption by the body. The nose will pierce large storm waves such that the water passes over the top. This results in a loss of efficiency of the power collection and so power is automatically shed, protecting the collector from damage. An additional benefit of having a wider nose and tail section is that external tendons can be attached to their outer edges and to extend down the length of the collector in a position away from the sides of the other sections. This can be seen in figure 19. The nose and tail portions are preferably twice the width of the other sections

Additional mass or buoyancy may be positioned at specific locations along the collector. Preferably this at the ends and possibly in the middle. This is used to correct the final draft and trim of the collector as the buckling tension is applied to the tendon cables. The buoyancy or mass is consequently concentrated in this portions and these portions stabilise the collector and when they move during excitation, there is a magnifying moment arm caused by their position with respect to the central portion of the unit. Having additional mass/buoyancy in the middle of the collector counteracts the end moment arms. Additional weighting in the ends also allows the tension in the tendons to be greater without the possibility of the device becoming unstable and curling up.

The ends of the collector are only restrained from one side and so they tend to move around more than the inboard parts. The tendon cables, if mounted externally tend remain straight between the attachment points at the ends. If the tendons are attached to the ends of the collector then the tendons will suffer drag due being dragged through the water. However, node points exist in the range of about 10% to 20% of the length of the collector from each end. These node points are where there is a minimum of movement of the body with respect to the water plane. Therefore, the tendon are preferably attached to the body at these node points such that movement in the water is minimised. Tensioning can be still adequately achieved without undue additional loading on the tendons.

As shown in figure 19, fenders 192 can be provided along the collector to prevent the tendons engaging the rest of the collector body and potentially damaging it should the body be deflected. However, as described above, if the tendons are attached at the nodes, the tendons move about less and so the need for the fenders is reduced and the number and size provided may be reduced.

The node points may also be used for attaching the mooring cables. By connecting the tendons and moorings, at the same point, a dual purpose attachment mechanism can be provided rather than separate attachments. The collector is preferably moored at both ends to avoid the need for complex attachments for the removal of pressurised fluid. However, this will depend on the environment and the variability of the incident wave direction.

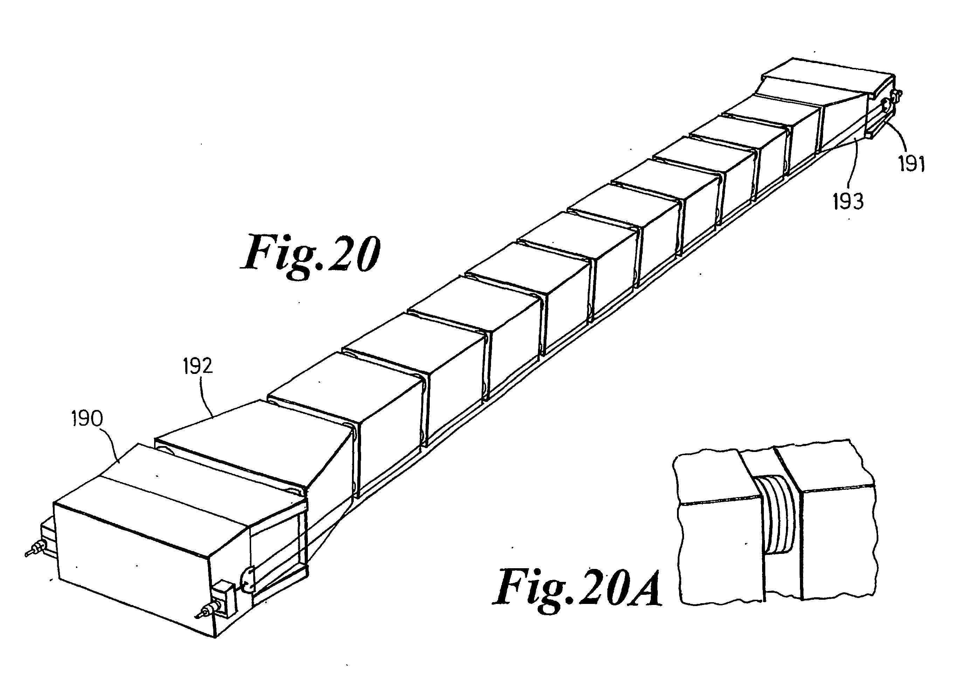

As will be apparent form the various exemplary embodiments described below, the cross-sectional shape of the collector sections may take a number of forms depending upon application, conditions, construction method used and so on. Figure 20 shows a further modification of the collector. In this construction, the sections are generally rectangular. The nose an tail section are again wider than the other sections. However, in this construction, additional intermediate sections are provided between the nose and tail section to provide a transition between the wide end sections and the remaining narrower sections. A transition section 192,193 is provide between the nose and tail sections and has a width varying from that of the wider end section to that of the rest of the collector sections. Figure 20A shows a close up view of the connectors of the construction of figure 20. This construction utilises the cylindrical connectors provided with reinforcing washers laminated between the remaining elastomeric portions.

The present invention has been described for use on the surface of the water. However, it is also suitable for use in a vertical mode. In this arrangement, the collector is provided with a vertical mooring. The lower part may be tethered to the seabed or simply weighted down whilst the other end is retained close to the surface of the sea. This is generally achieved by tethering the upper part to a float. Rather than obtaining energy from bending due to the oscillation of the surface of the water, the collector in this arrangement is caused to bend by the surge of water as a wave passes overhead. At the surface of the sea, the water is moving up and down. However, below the surface for a significant depth, the water is moving backwards and forwards in the direction of propagation of the waves. This forward and backward motion diminishes with depth. Thus, a collector held in the position described above is caused to deflect significantly at the top whilst the bottom part moves relatively little. This difference in the amount of movement causes the deflector to flex significantly as each wave passes over the top of it. This flexing of the collector provides a similar action to that when the collector is arranged horizontally and thus can be used to provide a source of high pressure fluid.

This is particularly advantageous in offshore applications since the collector only needs to be tethered at the bottom to a vertical tether. For example in offshore oil extraction facilities, such wavepower devices can be used to generate power and also as a source of high pressure water which can be used as part of the extraction process whereby high pressure water is pumped into oil bearing rock to displace oil.

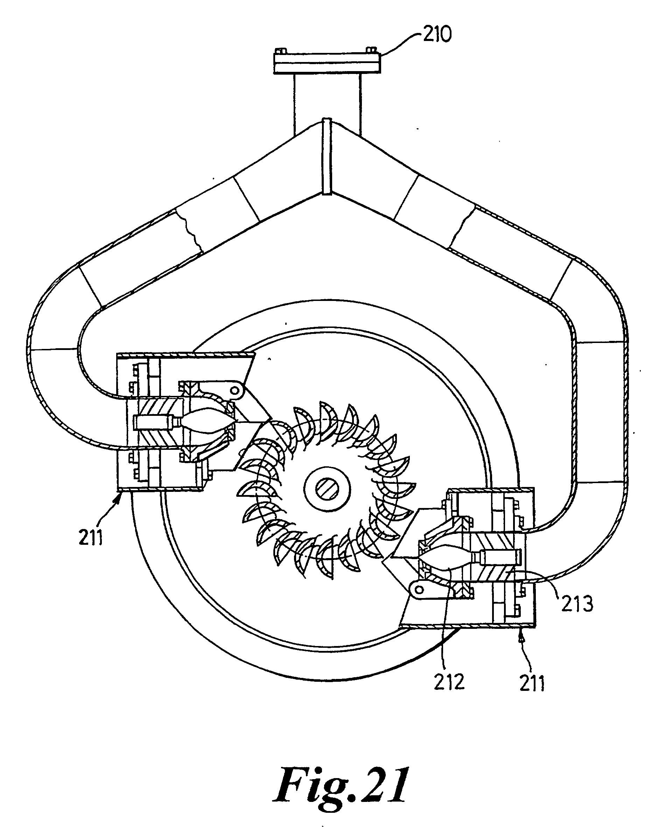

As described above, the oscillatory nature of the collector of the invention and the variation in wave amplitude means the power output from the collector varies over both the short and long terms. However, where the collector is being used to drive a turbine to produce electricity, a constant power source is preferable. To overcome this problem, the present invention utilises a Pelton wheel turbine to convert the high pressure fluid into mechanical power for driving the generator. Figure 21 shows a schematic representation of a Pelton wheel. High pressure fluid is fed into the system from the collector through the high pressure pipe 210. This is fed to one or more flow control valves 211 to control the flow. To operate at high efficiency, the jet velocity impinging on the turbine needs to be a constant multiple of the linear turbine speed (which is preferably constant). Typically Pelton turbines are driven from a fixed head of water and the valve simply controls the flow to vary the power. Consequently the spear which is moved in and out to control the flow is moved infrequently to respond to changes in generator demand. However, in the present system, the spear is continuously controlled in response to the varying supply to maintain the correct jet pressure from the valve but also to maintain the back pressure in the high pressure lines of the pump system. The spear position and hence control of the flow may be externally controlled by a control system monitoring the pressure of the supply, power demand, flow etc. However, the valve is preferably self-regulating using the line pressure. The valve operates in a similar manner to a scuba diving regulator. The spear 212 is mounted in the valve and is attached to a control piston 214 which is mounted on a support structure 213 in the centre of the valve. As the pressure in the supply line varies, a set of bellows is compressed or expanded. This causes the piston to move the spear in or out of the orifice 216 varying its size and controlling the jet velocity (i.e. maintaining it at the velocity prior to the change in pressure).

It is preferred to avoid providing hinges between the collector sections. Where the collector is under tension, then the sections are held together by the compressive force. However, particularly at the end sections, it may be desirable to include hinges and the present invention is not intended to exclude this possibility.

Considering the case where external tensioning is applied, the loads are considerable and care must be taken in selecting the material for the tendon cables. During the normal operation of the collector, as it hogs and sags, the axial length of the changes, reducing as it deviates from the still water position. In consequence, the length of the tendon cables also reduces and tends to offload. To avoid offloading and to maintain device efficiency the cable must be of a relatively low stiffness and for this reason steel ropes are not ideal. Polyester ropes by contrast have ideal characteristics; being sufficiently flexible to maintain tension during the normal working of the raft but substantially offloading in extreme weather and thereby limiting peak excursions.

In marine applications the cables are typically coated in polyurethane to inhibit marine growth. The cables are submerged in seawater and positioned around 1m below the still water level. In low energy seas, the device deflects and the cables will move about under the water. As the sea state increases a point is reached where the cables will broach the water surface. Polyester rope has excellent performance characteristics in seawater. The polyester fibres do not deteriorate over time in seawater. Preferably, the outside of the cables are coated with polyurethane to prevent bio-fouling and also to protect the cable from ultra violet degradation.

Cable creep is estimated to be 0.1% - 0.2% total strain change in 1yr. Most of the change occurs in the first few weeks. 50% of the change occurs in the first 10 cycles as the fiber bundles align themselves, the second half is due to creep in the fibre material itself and this occurs over the first few weeks. The same amount of cable creep occurs again but it occurs over the next 10 years. This means that the effect of cable creep is small and could be accounted for at the installation phase. Therefore, the cables are preferably stretched slightly further than theoretically required to account for this.

It will be understood that the present invention provides a collector which is provided with a number of pump pipes passing along its length. As the collector flexes, the axial length of the pump pipe varies and connectors provided between the sections allow for the reduction in the distance between the sections by axially compressing or sliding into the sections without allowing any increase in diameter. This ensures that the fluid in the pump pipe is compressed to a high level which can then be extracted and used in a number of various applications. It will be appreciated that a number of modifications can be made to the invention without departing from the scope of the appended claims.

## Claims

1. A wavepower collector (1, 101) comprising:
a plurality of spaced-apart sections (102); and
compressing means (105) for applying a retaining force to the sections to push the sections towards adjacent sections, **characterized by** further comprising
one or more passages (104) in each section for fluid communication, wherein a mouth of each passage is aligned with a mouth of a corresponding passage in an adjacent section; and
one or more compressible connectors (82, 100, 106, 406), each arranged between a mouth (81, 107) of a passage and the mouth (81, 107) of a corresponding passage in an adjacent section and having a through bore for fluid communication, wherein the connectors maintain the connection between each passage and its corresponding passage during variations in the distance between the mouth of each passage and the mouth of its corresponding passage due to the sections moving relative to one another.

2. A wavepower collector according to claim 1 wherein the connectors are axially compressible.

3. A wavepower collector according to claims 1 or 2 wherein the connectors are arranged such that, in use, the internal volume of the connectors reduces as the distance between the mouth of the passage and the mouth of its corresponding passage is reduced and vice versa.

4. A wavepower collector according to any one of the preceding claims wherein the connectors are formed from an elastic material.

5. A wavepower collector according to any one of the preceding claims wherein the connectors are made of natural rubber or reinforced polyethylene.

6. A wavepower collector according to any one of the preceding claims wherein the connectors are generally cylindrical.

7. A wavepower collector according to any one of claims 1-5 wherein the connectors have a generally cylinder shaped body in which the outside diameter decreases from the middle towards the ends.

8. A wavepower collector according to any one of claims 1-6 wherein the connector (100) is formed from one or more ring like structures each having an annular outer wall and two walls projecting generally radially inward.

9. A wavepower collector according to any one claims 1 to 8 wherein the connector includes a plurality of rigid washers (84).

10. A wavepower collector according to claim 9 wherein the washers (84) are arranged co-axially with the body of the connector and spaced along the length of the connector.

11. A wavepower collector according to claim 9 or 10 wherein the washers (84) are substantially laminar.

12. A wavepower collector according to claim 9 or 10 wherein the washers (84) are shaped to be slightly conical.

13. A wavepower collector according to any one of claims 1 to 3 wherein each connector is formed from a pair of extension tubes (180) and a link tube (181) of a different diameter to the extension tubes, each of the tubes being coaxial, the extension tubes extending from the mouth of the passage and the mouth of its corresponding passage respectively and wherein a seal portion (182) is provided in the annular space between the link tube and each of the extension tubes.

14. A wavepower collector (1, 101) comprising:
a plurality of spaced-apart sections (102); and
compressing means (105) for applying a retaining force to the sections to push the sections towards adjacent sections, **characterized by** further comprising
one or more passages (203) in each section for fluid communication, wherein a mouth of each passage is aligned with a mouth of a corresponding passage in an adjacent section;
one or more compressible spacer members arranged between adjacent sections to resist said retaining force and hold said sections in said spaced-apart configuration; and
one or more connectors (201), each provided between a mouth of a passage and the mouth of a corresponding passage, the ends of the connectors being arranged to slide axially within the respective mouths, wherein the connectors maintain the connection between each passage and its corresponding passage during variations in the distance between the mouth of each passage and the mouth of its corresponding passage due to the sections moving relative to one another.

15. A wavepower collector according to claim 14 wherein the connectors (201) further comprise a sealing portion at or near each end for preventing fluid communication between the interior of the passages and the exterior.

16. A wavepower collector according to claim 15 wherein the sealing portion (202, 204) is provided by one or more hydraulic seals (204)

17. A wavepower collector according to any one of claims 14 to 16 wherein the connectors are substantially axially incompressible.

18. A wavepower collector according to any one of claims 14 to 17 wherein the connectors are flexible along their longitudinal axis.

19. A wavepower collector according to any one of the preceding claims wherein the passages in a plurality of sections and the respective interconnecting connectors form a continuous pump pipe.

20. A wavepower collector according to any one of the preceding claims wherein the connector is reinforced (110) to resist radial expansion of its internal volume.

21. A wavepower collector according to claim 20 wherein the reinforcement is provided by internal wire windings (110).

22. A wavepower collector according to claim 21 wherein the wire windings (110) are arranged helically around the inner surface of the connector.

23. A wavepower collector according to any one of the preceding claims wherein the length of the collector is arranged to have a length in the range of 50% and 100% of the average wavelength of the prevailing waves, in use.

24. A wavepower collector according to any one of the preceding claims wherein the collector is restrained such that it flexes only in a vertical plane along its length.

25. A wavepower collector according to any one of the preceding claims wherein the compressing means is cable (105) connected between the end regions of the collector such that in use the cable may be tensioned to place the body of the collector under a compressive strain.

26. A wavepower collector according to claim 25 wherein the cable passes through the inside of the sections.

27. A wavepower collector according to claim 26 wherein annular spacers (103) are provided on the cable between each section.

28. A wavepower collector according to claim 27 wherein the spacers include a plurality of rigid washers to form a laminated structure.

29. A wavepower collector according to claim 25 wherein the cable is connected to the collector externally.

30. A wavepower collector according to any one of claims 25 to 29 wherein the cable is formed of polyester.

31. A wavepower collector according to any one of the preceding claims wherein at least one of the end sections has larger dimensions than the other sections.

32. A wavepower collector according to claim 31 wherein said at least one end section is wider than the other section in the plane of the sea surface.

33. A wavepower collector according to claim 31 or 32 wherein at least one of the end sections has a different weight or buoyancy than the other sections.

34. A wavepower collector according to any one of the preceding claims, further comprising a turbine for converting pressurised fluid generated in the passage to rotary motion, wherein the flow from the passage to the turbine is controlled by valve, the valve being arranged to maintain a predetermined back pressure in the passage.

35. A wavepower collector according to claim 34 wherein the turbine is a Pelton turbine and the valve is a spear valve.

36. A wavepower collector according to claim 35 wherein the spear valve includes pressure sensor for sensing the pressure in the inlet for controlling the position of the spear to control velocity of jet produced by the spear valve.

37. A wavepower collector according to any one of the preceding claims further comprising at least one header vessel provided on the collector and connected to one or more of the pump pipes via a one way valve and further comprising an outlet to provide, in use, pressurised fluid.

38. A wavepower collector according to any of the preceding claims wherein one end of the collector is connectable to a vertical tether such that, in use, the collector can be used vertically with one end anchored to hold it below the opposite end.

39. A wavepower collector according to any one of the preceding claims, wherein at least a part of the passage is mounted on the outside of the section.

40. A wavepower collector according to any one of the preceding claims, wherein each section has a substantially flat face which is generally perpendicular to the longitudinal axis of the collector and facing an adjacent section.

41. A wavepower collector according to any one of the preceding claims, wherein the sections are substantially cylindrical.

42. A wavepower collector according to claim 41, wherein the sections are arranged side by side with their longitudinal axes substantially perpendicular to the longitudinal axis of the collector.

43. A connector (106) for use with a wavepower collector according to any one of claims 1 to 12, the connector comprising a generally cylindrical body in which the outside diameter decreases from the middle towards the ends and including internal reinforcing (110) to resist radial expansion of its internal volume.

44. A kit of parts for producing a wavepower collector, comprising:
a plurality of sections (102) with one or more passages (104) in each section for fluid communication, wherein, in use, a mouth of each passage can be aligned with a mouth of a corresponding passage in an adjacent section;
compressing means (105) for applying a retaining force to the sections, in use, to push the sections towards adjacent sections; and
one or more compressible connectors (82, 100, 106, 406), to be arranged in use between a mouth (81, 107) of a passage and the mouth (81, 107) of a corresponding passage in an adjacent section and having a through bore for fluid communication, wherein, in use, the connectors maintain the sections in a spaced-apart configuration and maintain the connection between each passage and its corresponding passage during variations in the distance between the mouth of each passage and the mouth of its corresponding passage due to the sections moving relative to one another.

45. A kit of parts for a wavepower collector (1, 101), comprising:
a plurality of spaced-apart sections (102) with one or more passages in each section for fluid communication, wherein, in use, a mouth of each passage can be aligned with a mouth of a corresponding passage in an adjacent section;
compressing means (105) for applying a retaining force to the sections, in use, to push the sections towards adjacent sections;
one or more compressible spacer members to be arranged in use between adjacent sections to resist said retaining force and hold said sections in said spaced-apart configuration; and
one or more connectors (201), to be arranged, in use, between a mouth of a passage and the mouth of a corresponding passage, the ends of the connectors being arranged to be able to slide axially within the respective mouths, such that when in position in use, the connectors maintain the connection between each passage and its corresponding passage during variations in the distance between the mouth of each passage and the mouth of its corresponding passage due to the sections moving relative to one another.

## Patentansprüche

1. Wellenenergie-Kollektor (1, 101), der folgendes umfaßt:
eine Vielzahl von mit Zwischenraum angeordneten Sektionen (102) und
Druckmittel (105) zum Ausüben einer Haltekraft auf die Sektionen, um die Sektionen zu benachbarten Sektionen hin zu drücken, **dadurch gekennzeichnet, daß** er außerdem folgendes umfaßt:
einen oder mehrere Durchgänge (104) in jeder Sektion für eine Fluidverbindung, bei denen eine Mündung jedes Durchgangs mit einer Mündung eines entsprechenden Durchgangs in einer benachbarten Sektion ausgerichtet wird, und
ein oder mehrere zusammendrückbare Verbindungsstücke (82, 100, 106, 406), jedes zwischen einer Mündung (81, 107) eines Durchgangs und der Mündung (81, 107) eines entsprechenden Durchgangs in einer benachbarten Sektion angeordnet und mit einer Durchgangsbohrung für eine Fluidverbindung, bei denen die Verbindungsstücke bei Veränderungen des Abstands zwischen der Mündung jedes Durchgangs und der Mündung seines entsprechenden Durchgangs auf Grund einer Bewegung der Sektionen im Verhältnis zueinander die Verbindung zwischen jedem Durchgang und seinem entsprechenden Durchgang aufrechterhalten.

2. Wellenenergie-Kollektor nach Anspruch 1, bei dem die Verbindungsstücke in Axialrichtung zusammengedrückt werden können.

3. Wellenenergie-Kollektor nach Anspruch 1 oder 2, bei dem die Verbindungsstücke so angeordnet werden, daß sich bei Anwendung das innere Volumen der Verbindungsstücke verringert, wenn der Abstand zwischen der Mündung des Durchgangs und der Mündung seines entsprechenden Durchgangs verringert wird, und umgekehrt.

4. Wellenenergie-Kollektor nach einem der vorhergehenden Ansprüche, bei dem die Verbindungsstücke aus einem elastischen Material geformt werden.

5. Wellenenergie-Kollektor nach einem der vorhergehenden Ansprüche, bei dem die Verbindungsstücke aus Naturkautschuk oder verstärktem Polyethylen hergestellt werden.

6. Wellenenergie-Kollektor nach einem der vorhergehenden Ansprüche, bei dem die Verbindungsstücke allgemein zylindrisch sind.

7. Wellenenergie-Kollektor nach einem der Ansprüche 1 bis 5, bei dem die Verbindungsstücke einen allgemein zylinderförmigen Körper haben, bei dem der Außendurchmesser von der Mitte zu den Enden hin abnimmt

8. Wellenenergie-Kollektor nach einem der Ansprüche 1 bis 6, bei dem das Verbindungsstück (100) aus einer oder mehreren ringartigen Strukturen geformt wird, die jede eine ringförmige Außenwand und zwei Wände haben, die allgemein in Radialrichtung nach innen vorstehen.

9. Wellenenergie-Kollektor nach einem der Ansprüche 1 bis 8, bei dem das Verbindungsstück eine Vielzahl von starren Scheiben (84) einschließt.

10. Wellenenergie-Kollektor nach Anspruch 9, bei dem die Scheiben (84) koaxial mit dem Körper des Verbindungsstücks und mit Zwischenraum entlang der Länge des Verbindungsstücks angeordnet werden.

11. Wellenenergie-Kollektor nach Anspruch 9 oder 10, bei dem die Scheiben (84) wesentlich lamellenförmig sind.

12. Wellenenergie-Kollektor nach Anspruch 9 oder 10, bei dem die Scheiben (84) so geformt werden, daß sie leicht konisch sind.

13. Wellenenergie-Kollektor nach einem der Ansprüche 1 bis 3, bei dem jedes Verbindungsstück aus einem Paar von Verlängerungsröhren (180) und einer Verbindungsröhre (181) mit einem anderen Durchmesser als die Verlängerungsröhren geformt wird, wobei jede der Röhren koaxial ist, sich die Verlängerungsröhren von der Mündung des Durchgangs bzw. der Mündung seines entsprechenden Durchgangs erstrecken und bei dem im ringförmigen Raum zwischen der Verbindungsröhre und jeder der Verlängerungsröhren ein Dichtungsabschnitt (182) bereitgestellt wird.

14. Wellenenergie-Kollektor (1, 101), der folgendes umfaßt:
eine Vielzahl von mit Zwischenraum angeordneten Sektionen (102) und
Druckmittel (105) zum Ausüben einer Haltekraft auf die Sektionen, um die Sektionen zu benachbarten Sektionen hin zu drücken, **dadurch gekennzeichnet, daß** er außerdem folgendes umfaßt:
einen oder mehrere Durchgänge (203) in jeder Sektion für eine Fluidverbindung, bei denen eine Mündung jedes Durchgangs mit einer Mündung eines entsprechenden Durchgangs in einer benachbarten Sektion ausgerichtet wird, und
ein oder mehrere zusammendrückbare Abstandselemente, angeordnet zwischen benachbarten Sektionen, um der Haltekraft zu widerstehen und die Sektionen in der Zwischenraumkonfiguration zu halten, und
ein oder mehrere Verbindungsstücke (201), jedes zwischen einer Mündung eines Durchgangs und der Mündung eines entsprechenden Durchgangs bereitgestellt, wobei die Enden der Verbindungsstücke dafür angeordnet werden, innerhalb der jeweiligen Mündungen zu gleiten, bei denen die Verbindungsstücke bei Veränderungen des Abstands zwischen der Mündung jedes Durchgangs und der Mündung seines entsprechenden Durchgangs auf Grund einer Bewegung der Sektionen im Verhältnis zueinander die Verbindung zwischen jedem Durchgang und seinem entsprechenden Durchgang aufrechterhalten.

15. Wellenenergie-Kollektor nach Anspruch 14, bei dem die Verbindungsstücke (201) außerdem an oder nahe jedem Ende einen Dichtabschnitt umfassen, um eine Fluidverbindung zwischen dem Inneren der Durchgänge und dem Äußeren zu verhindern.

16. Wellenenergie-Kollektor nach Anspruch 15, bei dem der Dichtabschnitt (202, 204) durch eine oder mehrere Hydraulikdichtungen (204) bereitgestellt wird.

17. Wellenenergie-Kollektor nach einem der Ansprüche 14 bis 16, bei dem die Verbindungsstücke wesentlich in Axialrichtung nicht zusammengedrückt werden können.

18. Wellenenergie-Kollektor nach einem der Ansprüche 14 bis 17, bei dem die Verbindungsstücke entlang ihrer Längsachse flexibel sind.

19. Wellenenergie-Kollektor nach einem der vorhergehenden Ansprüche, bei dem die Durchgänge in einer Vielzahl von Sektionen und die entsprechenden verbindenden Verbindungsstücke eine durchgehende Pumpenleitung bilden.

20. Wellenenergie-Kollektor nach einem der vorhergehenden Ansprüche, bei dem das Verbindungsstück verstärkt (110) wird, um einer Ausdehnung seines inneren Volumens in Radialrichtung zu widerstehen.

21. Wellenenergie-Kollektor nach Anspruch 20, bei dem die Verstärkung durch innere Drahtwicklungen (110) bereitgestellt wird.

22. Wellenenergie-Kollektor nach Anspruch 21, bei dem die Drahtwicklungen (110) spiralförmig um die Innenfläche des Verbindungsstücks angeordnet werden.

23. Wellenenergie-Kollektor nach einem der vorhergehenden Ansprüche, bei dem die Länge des Kollektors so ausgelegt wird, daß er bei Anwendung eine Länge im Bereich zwischen 50% und 100% der Durchschnittswellenlänge der vorherrschenden Wellen hat.

24. Wellenenergie-Kollektor nach einem der vorhergehenden Ansprüche, bei dem der Kollektor so festgehalten wird, daß er sich nur in einer Vertikalebene entlang seiner Länge biegt.

25. Wellenenergie-Kollektor nach einem der vorhergehenden Ansprüche, bei dem das Druckmittel ein Kabel (105) ist, verbunden zwischen den Endbereichen des Kollektors derart, daß das Kabel bei Anwendung gespannt werden kann, um den Körper des Kollektors unter eine Druckverformung zu setzen.

26. Wellenenergie-Kollektor nach Anspruch 25, bei dem das Kabel durch das Innere der Sektionen hindurchgeht.

27. Wellenenergie-Kollektor nach Anspruch 26, bei dem am Kabel jeweils zwischen den Sektionen ringförmige Abstandsstücke (103) bereitgestellt werden.

28. Wellenenergie-Kollektor nach Anspruch 27, bei dem die Abstandsstücke eine Vielzahl von starren Scheiben umfassen, um eine lamellenförmige Struktur zu bilden.

29. Wellenenergie-Kollektor nach Anspruch 25, bei dem das Kabel außen mit dem Kollektor verbunden wird.

30. Wellenenergie-Kollektor nach einem der Ansprüche 25 bis 29, bei dem das Kabel aus Polyester geformt wird.

31. Wellenenergie-Kollektor nach einem der vorhergehenden Ansprüche, bei dem wenigstens eine der Endsektionen größere Abmessungen hat als die anderen Sektionen.

32. Wellenenergie-Kollektor nach Anspruch 31, bei dem die wenigstens eine Endsektion in der Ebene der Meeresoberfläche breiter ist als die andere Sektion.

33. Wellenenergie-Kollektor nach Anspruch 31 oder 32, bei dem die wenigstens eine Endsektion ein anderes Gewicht oder einen anderen Auftrieb als die anderen Sektionen hat.

34. Wellenenergie-Kollektor nach einem der vorhergehenden Ansprüche, der außerdem eine Turbine umfaßt, um von unter Druck gesetztes Fluid, das in dem Durchgang erzeugt wird, in Drehbewegung umzuwandeln, bei dem der Fluß vom Durchgang zur Turbine durch ein Ventil geregelt wird, wobei das Ventil dafür ausgelegt wird, einen vorher festgelegten Gegendruck im Durchgang aufrechtzuerhalten.

35. Wellenenergie-Kollektor nach Anspruch 34, bei dem die Turbine eine Pelton-Turbine ist und das Ventil ein Speerventil ist.

36. Wellenenergie-Kollektor nach Anspruch 35, bei dem das Speerventil einen Drucksensor zum Abfühlen des Drucks im Einlaß einschließt, um zum Regeln der durch das Speerventil erzeugten Strahlgeschwindigkeit die Position des Speers zu regeln.

37. Wellenenergie-Kollektor nach einem der vorhergehenden Ansprüche, der außerdem wenigstens einen am Kollektor bereitgestellten und über ein Einwegventil mit einer oder mehreren der Pumpenleitungen verbundenen Sammelbehälter umfaßt, und der außerdem einen Auslass umfaßt, um bei Anwendung unter Druck gesetztes Fluid bereitzustellen.

38. Wellenenergie-Kollektor nach einem der vorhergehenden Ansprüche, bei dem ein Ende des Kollektors mit einem vertikalen Halteseil verbunden werden kann, so daß der Kollektor bei Anwendung in Vertikalrichtung verwendet werden kann, wobei ein Ende verankert wird, um es unterhalb des entgegengesetzten Endes zu halten.

39. Wellenenergie-Kollektor nach einem der vorhergehenden Ansprüche, bei dem wenigstens ein Teil des Durchgangs an der Außenseite der Sektion angebracht wird.

40. Wellenenergie-Kollektor nach einem der vorhergehenden Ansprüche, bei dem jede Sektion eine wesentlich ebene Fläche hat, die allgemein senkrecht zur Längsachse des Kollektors ist und zu einer benachbarten Sektion zeigt.

41. Wellenenergie-Kollektor nach einem der vorhergehenden Ansprüche, bei dem die Sektionen wesentlich zylindrisch sind.

42. Wellenenergie-Kollektor nach Anspruch 41, bei dem die Sektionen nebeneinander angeordnet werden, wobei ihre Längsachsen wesentlich senkrecht zur Längsachse des Kollektors sind.

43. Verbindungsstück (106) zur Verwendung mit einem Wellenenergie-Kollektor nach einem der Ansprüche 1 bis 12, wobei das Verbindungsstück einen allgemein zylinderförmigen Körper umfaßt, bei dem der Außendurchmesser von der Mitte zu den Enden hin abnimmt, und der eine innere Verstärkung (110) einschließt, um einer Ausdehnung seines inneren Volumens in Radialrichtung zu widerstehen.

44. Satz von Teilen zum Herstellen eines Wellenenergie-Kollektors, wobei der Satz folgendes umfaßt:
eine Vielzahl von Sektionen (102) mit einem oder mehreren Durchgängen (104) in jeder Sektion für eine Fluidverbindung, wobei bei Anwendung die Mündung jedes Durchgangs mit einer Mündung eines entsprechenden Durchgangs in einer benachbarten Sektion ausgerichtet werden kann,
Druckmittel (105) zum Ausüben einer Haltekraft auf die Sektionen bei Anwendung, um die Sektionen zu benachbarten Sektionen hin zu drücken, und
ein oder mehrere zusammendrückbare Verbindungsstücke (82, 100, 106, 406), bei Anwendung anzuordnen zwischen einer Mündung (81, 107) eines Durchgangs und der Mündung (81, 107) eines entsprechenden Durchgangs in einer benachbarten Sektion und mit einer Durchgangsbohrung für eine Fluidverbindung, bei denen bei Anwendung die Verbindungsstücke bei Veränderungen des Abstands zwischen der Mündung jedes Durchgangs und der Mündung seines entsprechenden Durchgangs auf Grund einer Bewegung der Sektionen im Verhältnis zueinander die Sektionen in einer Zwischenraumkonfiguration halten und die Verbindung zwischen jedem Durchgang und seinem entsprechenden Durchgang aufrechterhalten.

45. Satz von Teilen für einen Wellenenergie-Kollektor (1, 101), wobei der Satz folgendes umfaßt:
eine Vielzahl von mit Zwischenraum angeordneten Sektionen (102) mit einem oder mehreren Durchgängen in jeder Sektion für eine Fluidverbindung, wobei bei Anwendung die Mündung jedes Durchgangs mit einer Mündung eines entsprechenden Durchgangs in einer benachbarten Sektion ausgerichtet werden kann,
Druckmittel (105) zum Ausüben einer Haltekraft auf die Sektionen bei Anwendung, um die Sektionen zu benachbarten Sektionen hin zu drücken,
ein oder mehrere zusammendrückbare Abstandselemente, anzuordnen zwischen benachbarten Sektionen, um der Haltekraft zu widerstehen und die Sektionen in der Zwischenraumkonfiguration zu halten, und
ein oder mehrere zusammendrückbare Verbindungsstücke (201), bei Anwendung anzuordnen zwischen einer Mündung eines Durchgangs und der Mündung eines entsprechenden Durchgangs, wobei die Enden der Verbindungsstücke dafür angeordnet werden, innerhalb der jeweiligen Mündungen gleiten zu können, so daß, wenn sie bei Anwendung in Position sind, die Verbindungsstücke bei Veränderungen des Abstands zwischen der Mündung jedes Durchgangs und der Mündung seines entsprechenden Durchgangs auf Grund einer Bewegung der Sektionen im Verhältnis zueinander die Verbindung zwischen jedem Durchgang und seinem entsprechenden Durchgang aufrechterhalten.

## Revendications

1. Collecteur d'énergie houlomotrice (1, 101), comprenant:
plusieurs sections espacées (102); et
un moyen de compression (105) pour appliquer une force de retenue aux sections afin de pousser les sections vers des sections adjacentes, **caractérisé en ce qu'**il comprend en outre:
un ou plusieurs passages (104) dans chaque section pour établir une communication de fluide, une embouchure de chaque passage étant alignée avec une embouchure d'un passage correspondant dans une section adjacente; et
un ou plusieurs connecteurs compressibles (82, 100, 106, 406), agencés chacun entre une embouchure (81, 107) d'un passage et l'embouchure (81, 107) d'un passage correspondant dans une section adjacente et comportant un alésage de passage pour établir une communication de fluide, les connecteurs maintenant la connexion entre chaque passage et son passage correspondant en cas de variations de la distance entre l'embouchure de chaque passage et l'embouchure de son passage correspondant, par suite du déplacement relatif des sections.

2. Collecteur d'énergie houlomotrice selon la revendication 1, dans lequel les connecteurs sont compressibles axialement.

3. Collecteur d'énergie houlomotrice selon les revendications 1 ou 2, dans lequel les connecteurs sont agencés de sorte qu'en service, le volume interne des connecteurs est réduit en fonction de la réduction de la distance entre l'embouchure du passage et l'embouchure de son passage correspondant et vice-versa.

4. Collecteur d'énergie houlomotrice selon l'une quelconque des revendications précédentes, dans lequel les connecteurs sont composés d'un matériau élastique.

5. Collecteur d'énergie houlomotrice selon l'une quelconque des revendications précédentes, dans lequel les connecteurs sont composés de caoutchouc naturel ou de polyéthylène renforcé.

6. Collecteur d'énergie houlomotrice selon l'une quelconque des revendications précédentes, dans lequel les connecteurs sont généralement cylindriques.

7. Collecteur d'énergie houlomotrice selon l'une quelconque des revendications 1 à 5, dans lequel les connecteurs comportent un corps ayant en général une forme cylindrique, dans lequel le diamètre extérieur est réduit du centre vers les extrémités.

8. Collecteur d'énergie houlomotrice selon l'une quelconque des revendications 1 à 6, dans lequel le connecteur (100) est formé à partir d'une ou de plusieurs structures de type annulaire, comportant chacune une paroi externe annulaire et deux parois débordant en général radialement vers l'intérieur.

9. Collecteur d'énergie houlomotrice selon l'une quelconque des revendications 1 à 8, dans lequel le connecteur englobe plusieurs rondelles rigides (84).

10. Collecteur d'énergie houlomotrice selon la revendication 9, dans lequel les rondelles (84) sont agencées de manière coaxiale par rapport au corps du connecteur et espacées le long de la longueur du connecteur.

11. Collecteur d'énergie houlomotrice selon les revendications 9 ou 10, dans lequel les rondelles (84) sont pratiquement laminaires.

12. Collecteur d'énergie houlomotrice selon les revendications 9 ou 10, dans lequel les rondelles (84) ont une forme légèrement conique.

13. Collecteur d'énergie houlomotrice selon l'une quelconque des revendications 1 à 3, dans lequel le connecteur est formé à partir d'une paire de tubes d'extension (180) et d'un tube de liaison (181) ayant un diamètre différent de celui des tubes d'extension, chacun des tubes étant coaxial, les tubes d'extension s'étendant respectivement à partir de l'embouchure du passage et de l'embouchure de son passage correspondant, une partie d'étanchéité (182) étant agencée dans l'espace annulaire entre le tube de liaison et les tubes d'extension.

14. Collecteur d'énergie houlomotrice (1, 101), comprenant:
plusieurs sections espacées (102); et
un moyen de compression (105) pour appliquer une force de retenue aux sections afin de pousser les sections vers des sections adjacentes, **caractérisé en ce qu'**il comprend en outre:
un ou plusieurs passages (203) dans chaque section pour établir une communication de fluide, une embouchure de chaque passage étant alignée avec une embouchure d'un passage correspondant dans une section adjacente;
un ou plusieurs éléments d'espacement compressibles agencés entre les sections adjacentes pour résister à ladite force de retenue et maintenir lesdites sections dans ladite configuration espacée; et
un ou plusieurs connecteurs (201), agencés chacun entre une embouchure d'un passage et l'embouchure d'un passage correspondant, les extrémités de connecteurs étant agencées de sorte à glisser axialement dans les embouchures correspondantes, les connecteurs maintenant la connexion entre chaque passage et son passage correspondant en cas de variations de la distance entre l'embouchure de chaque passage et l'embouchure de son passage correspondant, par suite du déplacement relatif des sections.

15. Collecteur d'énergie houlomotrice selon la revendication 14, dans lequel les connecteurs (201) comprennent en outre une partie d'étanchéité au niveau de chaque extrémité ou en un point proche de celle-ci pour empêcher l'établissement d'une communication de fluide entre l'intérieur des passages et l'extérieur.

16. Collecteur d'énergie houlomotrice selon la revendication 15, dans lequel la partie d'étanchéité (202, 204) est établie par un ou plusieurs joints hydrauliques (204).

17. Collecteur d'énergie houlomotrice selon l'une quelconque des revendications 14 à 16, dans lequel les connecteurs sont pratiquement incompressibles dans la direction axiale.

18. Collecteur d'énergie houlomotrice selon l'une quelconque des revendications 14 à 17, dans lequel les connecteurs sont flexibles le long de leur axe longitudinal.

19. Collecteur d'énergie houlomotrice selon l'une quelconque des revendications précédentes, dans lequel les passages dans plusieurs sections et les connecteurs d'interconnexion respectifs forment un tube de pompe continu.

20. Collecteur d'énergie houlomotrice selon l'une quelconque des revendications précédentes, dans lequel le connecteur est renforcé (110) pour résister à la dilatation radiale de son volume interne.

21. Collecteur d'énergie houlomotrice selon la revendication 20, dans lequel le renforcement est établi par des enroulements de fil internes (110).

22. Collecteur d'énergie houlomotrice selon la revendication 21, dans lequel les enroulements de fil (110) sont agencés de manière hélicoïdale autour de la surface interne du connecteur.

23. Collecteur d'énergie houlomotrice selon l'une quelconque des revendications précédentes, dans lequel la longueur du collecteur est conçue de sorte à correspondre à une longueur comprise dans l'intervalle représentant 50% et 100% de la longueur d'onde moyenne des vagues prédominantes en service.

24. Collecteur d'énergie houlomotrice selon l'une quelconque des revendications précédentes, dans lequel le collecteur est retenu, de sorte à ne se fléchir que dans le plan vertical le long de sa longueur.

25. Collecteur d'énergie houlomotrice selon l'une quelconque des revendications précédentes, dans lequel le moyen de compression est constitué par un câble (105) connecté entre les régions d'extrémité du collecteur, de sorte qu'en service, le câble peut être tendu pour soumettre le corps du collecteur à une contrainte de compression.

26. Collecteur d'énergie houlomotrice selon la revendication 25, dans lequel le câble traverse l'intérieur des sections.

27. Collecteur d'énergie houlomotrice selon la revendication 26, dans lequel des éléments d'espacement annulaires (103) sont agencés sur le câble entre chaque section.

28. Collecteur d'énergie houlomotrice selon la revendication 27, dans lequel des éléments d'espacement englobent plusieurs rondelles rigides pour former une structure laminée.

29. Collecteur d'énergie houlomotrice selon la revendication 25, dans lequel le câble est connecté sur le collecteur sur la partie externe.

30. Collecteur d'énergie houlomotrice selon l'une quelconque des revendications 25 à 29, dans lequel le câble est composé de polyester.

31. Collecteur d'énergie houlomotrice selon l'une quelconque des revendications précédentes, dans lequel au moins une des sections d'extrémité a des dimensions supérieures à celles des autres sections.

32. Collecteur d'énergie houlomotrice selon la revendication 31, dans lequel au moins une des sections d'extrémité est plus large que l'autre section dans le plan de la surface de la mer.

33. Collecteur d'énergie houlomotrice selon les revendications 31 ou 32, dans lequel au moins une des sections d'extrémité a un poids différent ou une flottabilité différente de ceux des autres sections.

34. Collecteur d'énergie houlomotrice selon l'une quelconque des revendications précédentes, comprenant en outre une turbine pour convertir un fluide sous pression produit dans le passage en un mouvement de rotation, l'écoulement du passage vers la turbine étant contrôlé par une soupape, la soupape étant destinée à maintenir une contre-pression prédéterminée dans le passage.

35. Collecteur d'énergie houlomotrice selon la revendication 34, dans lequel la turbine est une turbine Pelton, la soupape étant une soupape à tige.

36. Collecteur d'énergie houlomotrice selon la revendication 35, dans lequel la soupape à tige englobe un capteur de pression pour détecter la pression dans l'entrée afin de contrôler la position de la tige pour contrôler la vitesse du jet produit par la soupape à tige.

37. Collecteur d'énergie houlomotrice selon l'une quelconque des revendications précédentes, comprenant en outre au moins un récipient collecteur agencé sur le collecteur et connecté à un ou plusieurs tubes de pompe par l'intermédiaire d'une soupape d'arrêt et comprenant en outre une sortie pour fournir en service un fluide sous pression.

38. Collecteur d'énergie houlomotrice selon l'une quelconque des revendications précédentes, dans lequel une extrémité du collecteur peut être connectée à un câble d'attache vertical, de sorte qu'en service, le collecteur peut être utilisé dans une position verticale, une extrémité étant ancrée, pour la maintenir au-dessous de l'extrémité opposée.

39. Collecteur d'énergie houlomotrice selon l'une quelconque des revendications précédentes, dans lequel au moins une partie du passage est montée sur l'extérieur de la section.

40. Collecteur d'énergie houlomotrice selon l'une quelconque des revendications précédentes, dans lequel chaque section comporte une face pratiquement plate, généralement perpendiculaire à l'axe longitudinal du collecteur et faisant face à une section adjacente.

41. Collecteur d'énergie houlomotrice selon l'une quelconque des revendications précédentes, dans lequel les sections sont pratiquement cylindriques.

42. Collecteur d'énergie houlomotrice selon la revendication 41, dans lequel les sections sont agencées côte à côte, leurs axes longitudinaux étant pratiquement perpendiculaires à l'axe longitudinal du collecteur.

43. Connecteur (106) destiné à être utilisé avec un collecteur d'énergie houlomotrice selon l'une quelconque des revendications 1 à 12, le connecteur comprenant un corps généralement cylindrique dans lequel le diamètre extérieur est réduit du centre vers les extrémités, et englobant un renforcement interne (110) pour résister à une dilatation radiale de son volume interne.

44. Ensemble de pièces pour produire un collecteur d'énergie houlomotrice, comprenant:
plusieurs sections (102), un ou plusieurs passages (104) étant agencés dans chaque section pour établir une communication de fluide, une embouchure de chaque passage pouvant être alignée en service avec l'embouchure d'un passage correspondant dans une section adjacente;
un moyen de compression (105) pour appliquer une force de retenue aux sections en service, afin de pousser les sections vers des sections adjacentes; et
un ou plusieurs connecteurs compressibles (82, 100, 106, 406), destinés à être agencés en service entre une embouchure (81, 107) d'un passage et l'embouchure (81, 107) d'un passage correspondant dans une section adjacente et comportant un alésage de passage pour établir une communication de fluide, les connecteurs maintenant en service les sections dans une configuration espacée et maintenant la connexion entre chaque passage et son passage correspondant en cas de variations de la distance entre l'embouchure de chaque passage et l'embouchure de son passage correspondant, par suite d'un déplacement relatif des sections.

45. Ensemble de pièces pour produire un collecteur d'énergie houlomotrice (1, 101), comprenant:
plusieurs sections (102), un ou plusieurs passages étant agencés dans chaque section pour établir une communication de fluide, une embouchure de chaque passage pouvant être alignée en service avec l'embouchure d'un passage correspondant dans une section adjacente;
un moyen de compression (105) pour appliquer une force de retenue aux sections en service, afin de pousser les sections vers des sections adjacentes;
un ou plusieurs éléments d'espacement compressibles destinés à être agencés en service entre les sections adjacentes pour résister à ladite force de retenue et maintenir lesdites sections dans ladite configuration espacée; et
un ou plusieurs connecteurs (201), destinés à être agencés en service entre une embouchure d'un passage et l'embouchure d'un passage correspondant, les extrémités de connecteurs étant agencées de sorte à glisser axialement dans les embouchures correspondantes, de sorte qu'après leur positionnement, les connecteurs maintiennent en service la connexion entre chaque passage et son passage correspondant en cas de variations de la distance entre l'embouchure de chaque passage et l'embouchure de son passage correspondant, par suite du déplacement relatif des sections.
